# EUROPEAN PATENT APPLICATION

(11) **EP 4 823 086 A1**
(43) Date of publication of application: **14.10.2026**
(21) Application number: 25169683.7
(22) Date of filing: 10.04.2025
(51) Int. Cl.: H04N 1/60, G06T 5/92, H04N 9/68

(54) **A GAMUT MAPPING USEFUL FOR HDR IMAGES**

(71) Applicant: Koninklijke Philips N.V., 5656 AE Eindhoven (NL)
(72) Inventor: TICHELAAR, Johannes Yzebrand, 5656 AG Eindhoven (NL)
(74) Representative: Philips Intellectual Property & Standards

(57) **Abstract**

An apparatus (501) for gamut mapping saturated colors to a narrow gamut representation such as Rec. 709 comprising performing at least two iterations of the following calculations:
- determine threshold values for the three color components based on two of the iterated color components which are not the color component that the threshold is for: $Rthr = kRG * Gt + kRB * Bt ;$ $Gthr = kGR * Rt + kGB * Bt ;$ $Bthr = kBR * Rt + kBG * Gt ;$ and
- performing the following three mapping functions on the input color components: $Rout = Rthr + \left(R2lin_i-Rthr\right) / diff_gain if R 2 lin_i < Rthr$ $Rout = R 2 lin_i if R 2 lin_i > = Rthr ;$ $Gout = Gthr + \left(G2lin_i-Gthr\right) / diff_gain if G 2 lin_i < Gthr$ $Gout = G 2 lin_i if G 2 lin_i > = Ghr ;$ $Bout = Bthr + \left(B2lin_i-Bthr\right) / diff_gain if B 2 lin_i < Bthr$ $Bout = B 2 lin_i if B 2 lin_i > = Bthr ;$ and
- setting the three iterated color components for the next iteration equal to the output values of the three mapping functions:
Rt = Rout;
Gt = Gout;
Bt = Bout; and

wherein the k coefficients are fixed coefficients depending on the color bases.

## Description

### FIELD OF THE INVENTION

The invention relates to a new manner of chromatic gamut mapping, i.e. from a set of colors defined in a wider gamut covered by more saturated primaries (e.g. Rec. 2020) to narrower primaries, e.g. legacy Rec 709 primaries. Although not only usable for HDR images, the method is especially useful for application to HDR images, and in particular in coding technologies for storing or communicating HDR images, in particular backwards-compatible HDR codecs which communicate HDR images as corresponding SDR images plus metadata to reconstruct the HDR images, such as e.g. Single Layer HDR codec SL-HDR as defined in ETSI 403 133-1 (SL_HDR-1).

### BACKGROUND OF THE INVENTION

Compared to relatively simpler image definition for communication in the legacy television broadcast and image handling era of the past century, a considerably more elaborated technology of high dynamic range image handling has recently been developed, including movie creation for e.g. internet-communicated on demand delivery, and later for television broadcasts (e.g. several channels coded with applicant's recent technology are currently on air in the USA using their new ATSC3.0 standard). A HDR handling technical chain is only complete if one has available all the components available from HDR image creation (specification) up to HDR image display; this in contrast with systems which may initially generate an image of higher dynamic range than the reference -standard dynamic range legacy images- but then brightness map (a.k.a. down-grade) such "out-of-range" images back into the normal SDR range and format/definition (whether including some clipping or not).

For more than half a century, an image representation/coding technology which is now called **Low Dynamic Range (LDR) or Standard Dynamic Range (SDR)** worked perfectly fine for creating, communicating and displaying electronic images such as videos (i.e. temporally successive sequences of images). Colorimetrically, i.e. regarding the specification of the pixel colors, it was based on the technology which already worked fine decades before for photographic materials and paintings: one merely needed to be able to define, and display, most of the colors projecting out of an axis of achromatic colors (a.k.a. greys) which spans from black at the bottom end to the brightest achromatic color giving the impression to the viewer of being white. For television communication, which relies on an additive color creation mechanism at the display side, a triplet of red, green and blue color components needed to be communicated for each position on the display screen (pixel), since with a suitably proportioned triplet (e.g. 60%, 30%, 25%) one can make almost all colors, and in practice all needed colors (white being obtained by driving the three display channels to their maximum, with driving signal Rmax=Gmax=Bmax). In LDR there would be nothing brighter than white, whereas in **High Dynamic Range** technology one has been researching various manners to define and finally display some pixel colors brighter than 100% white.

The earliest television standards (NTSC, PAL) communicated the color components as three voltage signals (which defined the amount of a color component between 0 and 700mV), where the time positions along the voltage signal corresponded by using a scan path with pixels on the screen.

The control signals generated at the creation side, directly instructed what the display should make as relative proportion (apart from their being an accidental fixed gamma pre-correction at the transmitter, because the physics of the cathode ray tube took approximately a square power of the input voltage, which would have made the dark colors much blacker than they were intended e.g. as seen by a camera) at the creation side). So a 60%, 30%, 25% color (which is a dark red) in the scene being captured, would look substantially similar on the display, since it would be re-generated as a 60%, 30%, 25% color (note that the absolute brightness didn't matter much, since the eye of the viewer would adapt to the white and the average brightness of the colors being displayed on the screen). One can call this "direct link driving", without further color processing (except for arbitrary and unnecessary processing a display maker might still perform to e.g. make his sky look more blue-ish). For reasons of backwards compatibility with the older black and white television broadcasts, instead of actually communicating a red, green and blue voltage signal, a brightness signal and two color difference signals called chroma were transmitted (in current nomenclature the blue chroma Cb, and the red chroma Cr (excess redness in the color)). The relationship between RGB and YCbCr is an easy one, namely they can be calculated into each other by using a simple fixed 3x3 matrix (the coefficients of which depend on the emission spectra of the elected three primaries, and are standardized, i.e. also to be emulated electronically internally by LCDs which actually may have different optical characteristics, so that from image communication point of view all SDR displays are alike).

These voltage signals were later for digital television (MPEG-based et al.) digitized, as prescribed in standard Rec. 709, and one defined the various amounts of e.g. the brightness component with an 8 bit code word, 0 coding for the darkest color (i.e. black), and 255 for white. Note that coded video signals need not be compressed in all situations (although they oftentimes are). In case they are we will use the wording compression (e.g. by MPEG-HEVC, AV1 etc.), not to be confused with the act of "compressing" colors in a smaller gamut respectively range. By brightness we mean the part of the color definition that will impact upon the colors (to be, or when) displayed the visual property of being darker respectively brighter. In the light of the present technologies, it is important to correctly understand that there can be two kinds of brightnesses: relative brightness (as a percentage of something, which may be undefined until a choice is made, e.g. by the consumer buying a certain display, and setting its brightness setting to e.g. 120%, which will make e.g. the backlight emit a certain amount of light, and so also the white and colored pixels), and on the other hand absolute brightness. The latter can be characterized by the universal physical quantity luminance (which is measured technically in the unit nit, which is also candela per square meter). The luminance can be stated as an amount of photons coming out of a patch on an object, such as a pixel on the screen, towards the eye (and it is related to the lighting concept of illuminance, since such patch will receive a certain illuminance, and send some fraction of it towards the viewer).

Recently two unrelated technologies have emerged, which only came together because people argued that one might as well in one go improve the visual quality of images on all aspects, but those two technologies have quite different technical aspects.

On the one hand there was a strive towards wide gamut image technology. It can be shown that only colors can be made which lie within the triangle spanned by the red, green and blue primaries, and nothing outside. But one chose (EBU, also re-standardized in Rec. 709) primaries (originally phosphors for the CRT, later color filters in the LCD, etc.) which lay relatively close to the spectral locus of all existing colors, so one could make sufficiently saturated colors for most purposes. Saturation specifies how far away a color lies from the achromatic (colorless) colors, i.e. how much "color" there is. However, recently one wanted to be able to use novel displays with more saturated primaries (e.g. DCI_P3, or Rec. 2020), so that one also needed to be able to represent colors in such wider color spaces. A color space is the mathematical 3D space to represent colors (defining geometric positions of colors by coordinate numbers, e.g. a red, green and blue value of the weighed combination of primary intensities in the produced total color), often presented in such a shape that the base is defined by the triangle of 3 primaries. Color model refers to the election of the categories of numerical values one uses to define the space, e.g. red, green and blue being a natural representation for specifying additive color generators, yet the same colors can be defined by three other coordinate ranges in the Hue, Saturation, and Value model, which model characterizes the colors in a more human-related manner. For the technical discussion we may better use the word color gamut, which is the set of all colors that can be technically defined or displayed (i.e. a space may be e.g. a 3D coordinate system going to infinity whereas the gamut may be a cube or tent-shape of some size in that space). When dealing with the brightness aspect only, one can talk about brightness or luminance range (more commonly worded as "dynamic range", spanning from some minimum brightness to its maximum brightness). Presented HDR technologies will not primarily be about chromatic (i.e. color per se, such as more specifically its saturation) aspects, but rather about brightness aspects, so chromatic aspects will only be mentioned to the extent needed for aspects or embodiments in which they are relevant.

A more important new technology (than wide gamut) is **High Dynamic Range (HDR).** This should not be construed as necessarily "exactly this high" (since there can be many variants of HDR representations, with successively higher range maximum), but rather as "higher than the reference/legacy representation: SDR". Since there are new coding concepts needed, one may also discriminate HDR from SDR by aspects of the technical details of the representation, e.g. the video signal. One difference of absolute HDR systems is that they define a unique luminance for each image pixel (e.g. a pixel in an image object being a white dog in the sun may be 550 nit), where SDR signals only had relative brightness definitions (so the dog would happen look e.g. 75 nit (corresponding to 94%) on somebody's computer monitor which could maximally show 80 nit, but it would display at 234 nit on a 250 nit SDR display (yet the viewer would not typically see any difference in the look of the image, unless having those displays side by side). I.e., whichever actual manner of coding the HDR image coder applies (e.g. as regards the format of the pixel color triplets, an RGB representation or alternatively a Y'CbCr representation), absolute HDR image or video coding allows the receiving side to state a definite luminance value for each pixel of the received image, whereas the relative systems cannot (when receiving relative images decoders can decide to display the pixel at some "arbitrary" luminance, but cannot decode an agreed luminance from the encoder). I.e. the reader should not confuse luminances as they exist (ultimately) at the front of any display, originating from the act of displaying the image, with luminances as are defined (i.e. establishable) on an image signal itself, i.e. even when that is e.g. stored but not displayed. Other differences are metadata that any flavor of HDR signal may have, but not the SDR signal. I.e. the coding of the signal will also indicate differences with SDR. And, ultimately there would be a chain of all-HDR apparatuses: an apparatus (e.g. camera) for generating HDR (i.e. e.g. > 10,000:1) images, an HDR video communication system, and an HDR end-user display to see the images (and anything additional in between, like e.g. grading software, should also be HDR-capable).

Colorimetrically, HDR images can represent brighter colors than SDR images, so in particular brighter than (Lambertian reflecting) white colors (glowing whites e.g.). Or in other words, the dynamic range will be larger. The SDR signal can represent a dynamic range of about 1000:1 (how much dynamic range is actual visible when displaying, will depend inter alia on the amount of surround light reflecting on the front of the display). The technical definition of the SDR signal format just doesn't allow more dynamic range. Typically that SDR luminance range may display between (approximately) 0.1 nit minimum well-visible black and (approximately) 100 nit white (minor variations in displaying won't matter much to the viewer). An image as encoded and communicated will typically be at least as good or better than a typical viewing scenario demands.

Now if one wants to represent e.g. 10,000:1, one must resort to making a new HDR image format definition (we may in general use the word signal if the image representation is being or to be communicated rather than e.g. merely existing in the creating IC, and in general signaling will also have its own formatting and packaging, and may employ further techniques depending on the communication mechanism such as modulation).

Depending on the situation, the human eye can easily see (even if all on a screen in front of the viewer corresponding to a small glare angle) 100,000:1 (e.g. 10,000 nit maximum and 0.1 minimum, which is a good black for television home viewing, i.e. in a dim room which only support lighting of a relatively low level, such as in the evening). If a dynamic range is characterized only by a **maximum luminance (ML),** it is typically defined relating to an assumed fixed reference minimum black (MB) luminance, e.g. 0.1 nit. In some scenarios one may also apply further principles and novel technology to the darkest colors of images (the blacks), however in many applications or systems it is assumed that the dark colors of the HDR images behave like those of the SDR image (or are not critically cared about), and the various technical components and approaches focus on the brighter (and middle) colors instead. Note that it is not necessary that all images as created by a creative (human or automaton) go as high as e.g. the maximum luminance of the entire video (ML_V). (S)he may elect to make the brightest image pixel in an image or the video e.g. 1000 nit.

The luminance of SDR white for videos (a.k.a. the SDR White Point Luminance (WPL) or maximum luminance (ML)), is standardized in video tech to be 100 nit (not to be confused with the reference luminance of white text in 1000 nit HDR images being typically 200 nit, i.e. a Lambertian white level in typical HDR images). I.e., a 1000 nit ML HDR image representation can make up to 10x brighter (glowing) object colors than an absolute SDR image. What one can content-wise, i.e. image object-wise, make with this are e.g. specular reflections on metals, such as a boundary of a metal window frame: in SDR the luminance has to end at 100 nit, making them visually on slightly brighter than the e.g. 70 nit light gray colors of the part of the window frame that does not specularly reflect. In HDR one can make those pixels that reflect the light source to the eye e.g. 900 nit, making them glow nicely giving a naturalistic look to the image as if it were a real scene. The same can be done with fireballs, light bulbs of a Christmas decoration in a garden, etc. This regards the definition of images; how a display which can only display whites as bright as 650 nit (i.e. the **display maximum luminance ML_D** rather than the video or content maximum luminance ML_V) is to actually display the images is an entirely different matter, namely one of **display adaptation a.k.a. display tuning,** not a matter of image (de)coding. However, the display will usually try to display as close as possible to the ideal displaying as far as the display capabilities allow (e.g. darker pixel luminances of an image may be displayed equi-luminance i.e. with the luminances as coded in the received image). Also the relationship with how a camera captures HDR scene colors may be tight or loose: we will in general assume that HDR colors have already been defined in the HDR image when talking about such technologies as coding, communication, dynamic range conversion and the like. In fact, the original camera-captured colors or specifically their luminances may have been changed into different values by e.g. a human **color** **grader** (who defines the ultimate look of an image, i.e. which color triplet values each pixel color of the image(s) should have), or some automatic algorithm. In fact, cameras normally don't even capture actual luminances, but linear brightness proportions. So we are typically talking about the coding of an HDR image grading, the brightnesses or luminances of that image, and the dynamic range of that image (per se, i.e. as it should ideally be displayed, on any display that has a capability to display the minimum and maximum luminance as prescribed in the image). If a color grader (human or automatic) considers in that image a 4000 nit sun disk pixel to be bright enough, it is for the majority of the technical discussions (apart from when they e.g. specifically deal with camera technologies) irrelevant what number the camera captured for the sun disk, let alone the original luminance of the sun in the captured scene. As regards the chromatic aspects, of wide gamut image technology, already for the fact that the chromatic gamut size may stretch with less than a factor 2, whereas the brightness range e.g. luminance range may stretch by a factor 100, one expects different technical rationales and solutions for the two improvement technologies. So we are mainly dealing with the height of the 3D gamut (or in a cube the diagonal distance from the zero vertex), on which vertical axis of achromatic greys we can locate the range of all luminances, e.g. all luminances codeable, or present in an image.

A HDR image may be associated with a metadatum called mastering display white point luminance (MDWPL), another technical name for a definition of the video-related maximum luminance ML_V. This value, which is typically communicated in metadata of the signal, and is a characterizer of the HDR video images (rather than of a specific display, as it is an element of a virtual display associated specifically with the video, being some ideal intended display for which the video pixel colors have been optimized to be conforming). This is an electable parameter of the video, which can be contemplated as similar to the election of the painting canvas aspect ratio by a painter: first the painter chooses an appropriate AR, e.g. 4:1 for painting a landscape, or 1:1 when he wants to make a still life, and thereafter he starts to optimally position all his objects in that elected painting canvas. In an HDR image the creator will then, after having established that the MDWPL is e.g. 5000 nit, make his secondary elections that in a specific scene this lamp shade should be at 700 nit, the flames in the hearth distributed around 500 nit, etc.

The primary visual aspect of HDR images is (since the blacks are more tricky) the additional bright colors (so one can define ranges with only a MDWPL value, if one assumes the bottom luminance to be fixed to e.g. 0.1 nit). However, HDR image creation can also involve deeper blacks, up to as deep as e.g. 0.0001 nit (although that is mostly relevant for dark viewing environments, such as in cinema theatres).

The other objects, e.g. the objects which merely reflect the scene light, will be coordinated to be e.g. at least 40x darker in a 5000 nit MDWPL graded video, and e.g. at least 20x darker in a 2000 nit video, etc. So the distribution of all image pixel luminances will typically depend on the MDWPL value (not making most of the pixels very bright).

The digital coding of the brightness, involves a technical quantity called **luma** (Y). We will give luminances the letter L, and (relative) brightnesses the letter B. Note that technically, e.g. for ease of definition of some operations, one can always normalize even 5000 nit WPDPL range luminances to the normalized range [0,1], but that doesn't detract from the fact that these normalized luminances still represent absolute luminances on a range ending at 5000 nit (in contrast to relative brightnesses that never had any clear associated absolute luminance value, and can only be converted to luminances ad hoc, typically with some arbitrary value).

For SDR signals the luma coding used a so-called Opto-electronic Transfer Function (OETF), between the optical brightnesses and the electronic typically 8 bit luma codes which (approximately) by definition was: $Y_float = sqrt \left(B_relative\right) .$

If B_relative is a float number ranging from 0 to 1.0, so will Y_float.

Subsequently that signal value Y _float is quantized, because we want 8 bit digital representations, ergo, the Y_dig value that is communicated to receivers over e.g. airways DVB (or internet-supplied video on demand, or blu-ray disk, etc.) has a value between 0 and 255 (i.e. power(2;8)-1).

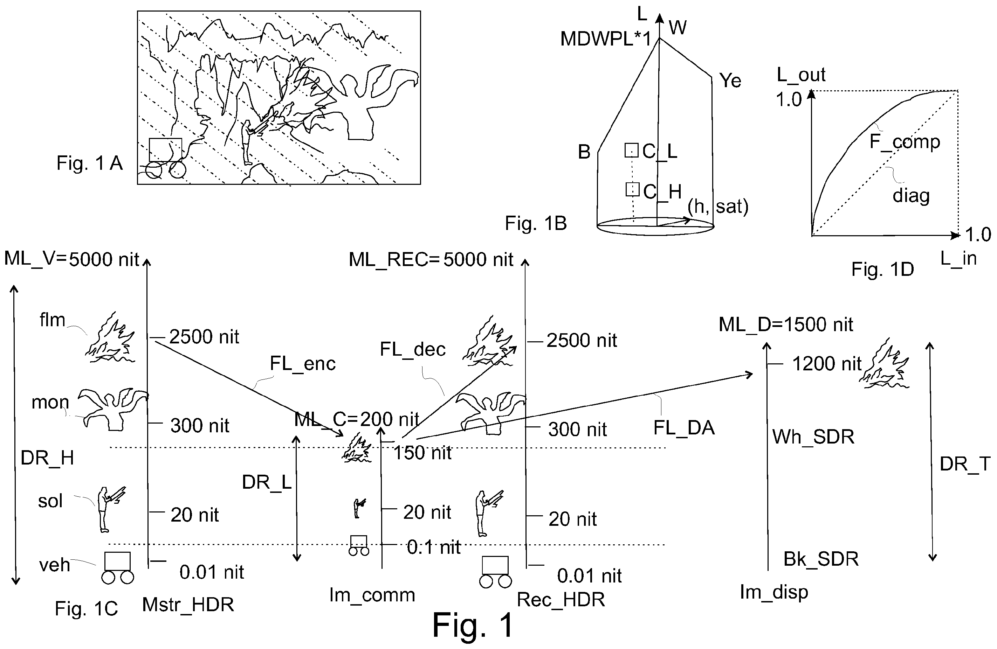

One can show the gamut of all SDR colors (or similarly one can show gamuts of HDR colors, which would if using the same RGB primaries defining the chromatic gamut have the same base, but after renormalization stretch vertically to a larger absolute gamut solid) as in **Fig. 1B****.** Larger Cb and Cr values will lead to a (psychovisually more relevant color characterizer) larger saturation (sat), which moves outwards from the unsaturated or colorless colors vertical axis showing the achromatic colors in the middle, towards the maximally saturated colors on the circle (which is a transformation of the usual color triangle spanned by the RGB primaries as vertices). Hues h (i.e. the color category, yellows, versus greens, versus blues) will be angles along the circle. The vertical axis represents normalized luminances (in a linear gamut representation), or normalized lumas (in a non-linear representation (coding) of those luminances, e.g via a psychovisually uniformized OETF or its inverse the EOTF). Since after normalization (i.e. division by the respective MDWPL values, e.g. 2000 for an HDR image of a particular video and 100 for an SDR image), the common representation will become easy, and one can define luminance (or luma) mapping functions on normalized axes as shown in **Fig. 1D** (i.e. which function F_comp re-distributes the various image object pixel values as needed, so that in the actual luminance representation e.g. a dark object looks the same, i.e. has the same luminance, but a different normalized luminance since in one situation a pixel normalized luminance will get multiplied by 100 and in the other situation by 2000, so to get the same end luminance the latter pixel should have a normalized luminance of 1/20^{th} of the former). When down-grading to a smaller range of luminances, one will typically get (in the normalized to 1.0 representation, i.e. mapping a range of normalized input luminances L_in between zero and one to normalized output luminances L_out) a compressive function (typically having a smaller than 45 degree angle for the brighter colors at least when shown in a luminance-luminance plot) which everywhere lies above the diagonal diag, but the exact shape of that function F_comp, e.g. how fact it has to rise at the blacks, will depend typically not only on the two MDWPL values, but (to have the most perfect re-grading technology version) also on the scene contents of various (video or still) images, e.g. whether the scene is a dark cave, and there is action happening in a shadowy area, which must still be reasonably visible even on 100 nit luminance ranges (hence the strong boost of the blacks for such a scenario, compared to a daylight scene which may employ a near linear function almost overlapping with the diagonal). Such a function may be called a concave function, when using the mathematical definition according to the concaveness of the hypograph. If the luminance re-grading has to go in the opposite direction, i.e. up-grading from a lower dynamic range image to a higher dynamic range image, a convex function will be used (using the mathematical definition that any line connecting two distinct points of the function, i.e. its locus of points, will lie above the function).

In the representation of Fig. 1B one can show the mapping from a HDR color (C_H) to an LDR color (C_L) of a pixel as a vertical shift (assuming that both colors should have the same proper color, i.e. hue and saturation, which usually is the desired technical requirement, i.e. on the circular ground plane they will project to the same point). Ye means the color yellow, and its complementary color on the opposite side of the achromatic axis of luminances (or lumas) is blue (B), and W signifies white (the brightest color in the gamut a.k.a. the white point of the gamut, with the darkest colors, the blacks being at the bottom).

So the receiving side (in the old days, or today) will know it has an SDR video, if it gets this format. The maximum white (of SDR) will be by definition the brightest color that SDR can define. So if one now wants to make brighter image colors (e.g of real luminous lamps), that should be done with a different codec (as one can show the math of the Rec. 709 OETF allows only a coding of up to 1000:1 and no more).

So one defined new frameworks with different code allocation functions (EOTFs, or OETFs). What is of interest here is primarily the definition of the luma codes.

For reasons beyond what is needed for the present discussion, most HDR codecs start by defining an Electro-optical transfer function instead of its inverse, the OETF. Then one can at least basically define brighter (and darker) colors. That as such is not enough for a professional HDR coding system, since because it is different from SDR, and there are even various flavors, one wants more (new compared to SDR coding) technical information relating to the HDR images, which will be metadata.

The property of those HDR EOTFs is that they are much steeper, to encode a much larger range of needed to be coded HDR luminances, and a significant part of that range coding specifically darker colors (relatively darker, since although one may be coding absolute luminances with e.g. the **Perceptual Quantizer (PQ)** EOTF (standardized in SMPTE 2084), one applies the function after normalization). In fact if one were to use exact power functions as EOTFs for coding HDR luminances as HDR lumas, one would have a power of 4, or even 7. When a receiver gets a video image signal defined by such an EOTF (e.g. Perceptual Quantizer) it will know it gets a HDR video. It will need the EOTF to be able to decode the pixel lumas in the plane of lumas spanning the image (i.e. having a width of e.g. 4000 pixels and a height of 2000), which will simply be binary numbers. Typically HDR images will also have a larger word length, e.g. 10 bit. However, one should not confuse the non-linear coding one can at will design by optimizing a non-linear EOTF shape with linear codings and the amount of bits needed for them. If one needs to drive, with a linear (bit-represented) code, e.g. a DMD pixel, indeed to reach e.g. 10000:1 modulation darkest to brightest, one needs to take the log2 to obtain the number of bits. There one would need to have at least 14 bits (which may for technical reasons get rounded upwards to 16 bits), since power(2;14)= 16384 > 10000. But being able to smartly design the shape of the EOTF, and knowing that the visual system sees not all luminance differences equally, the present applicant has shown that (surprisingly) quite reasonable HDR television signals can be communicated with only 8 bit per pixel color component (of course if technically achievable in a system, 10 bits may be better and more preferable). So the receiving side may in both situations get as input a coded pixel color (luma and Cb, Cr; or in some systems by matrixing equivalent non-linear R'G'B' component values) which lie between 0 and 255, or 0 and 1023, but it will know the kind of signal it is getting (hence what ought to be displayed) from the metadata, such as the metadata (e.g. MPEG VUI metadata) co-communicated EOTF (e.g. a value 16 meaning PQ; 18 means another OETF was used to create the lumas, namely the Hybrid LogGamma OETF, ergo the inverse of that function should be used to decode the luma plane), in many HDR codings the MDWPL value (e.g. 2000 nit), and in more advanced HDR codings further metadata (some may e.g. co-encode luminance -or luma- mapping functions to apply for mapping image luminances from a primary luminance dynamic range to a secondary luminance dynamic range, such as one function FL_enc per image).

We detail the typical needs of an already more sophisticated HDR image handling chain with the aid of simple elucidation **Fig. 1** (for a typical nice HDR scene image, of a monster being fought in a cave with a flame thrower, the **master grading** (Mstr_HDR) of which is shown spatially in Fig. 1A, and the range of occurring pixel luminances on the left of Fig. 1C). The master grading or master graded image is where the image creator can make his image look as impressive (e.g. realistic) as desired. E.g., in a Christmas movie he can make a baker's shop window look somewhat illuminated by making the yellow walls somewhat brighter than paper white, e.g. 150 nit (and real colorful yellow instead of pale yellow), and the light bulbs can be made 900 nit (which will give a really lit Christmas-like look to the image, instead of a dull one in which all lights are clipped white, and not much more bright than the rest of the image objects, such as the green of the Christmas tree). In general all aspects of the look, be they dark colors, or fine gradients, etc., can be tuned as desired, in principle, or at least as visually reasonable (e.g. an image that is signed off as being okay by somebody working as or for the creator). When somebody in the video is wearing a white shirt, the master grader (especially when a human, or at least a smart algorithm) can make the lit parts of the shirt realistically brighter than the shadowy parts (which should still look white), either as percentages or nits, rather than that a dumb algorithm that would make the unlit whites e.g. 90 nit and the lit ones 1000 nit, which would look visually unrealistic. Also down-converted gradings where e.g. the brown color of a sunlit part of a wooden object is bleached away may be less preferable than a bright color which still has some brown in it. So at least for some usage scenarios the specifies of the various gradings of the object luminances and colors may be relatively critical, and hence the various technologies handling such images must be able to reasonably cope with those technical desiderata.

So the basic thing one must be able to do is encode (and typically also decode and display) brighter image objects than in a typical SDR image.

Let's look at it colorimetrically now. **SDR** (and its coding and signaling) was designed to be able to communicate any Lambertian reflecting color (i.e. a typical object, like your blue jeans pants, which absorbs some of the infalling light, e.g. the red and green wavelengths, to emit only blue light to the viewer or capturing camera) under good uniform lighting (of the scene where the action is camera-captured). Just like we would do on a painting: if we don't add paint we get the full brightness reflecting back from the white painting canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable chromaticities (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in legacy SDR white does not actually have a luminance, since legacy SDR does not have a luminance associated with the image, but we can pretend it to be X nit, e.g. typically 100 nit, which is good average representative value of the various legacy SDR tv's). Anything darker than about 5% might start looking black-ish. So especially when we try to make a high quality HDR image for display of e.g. a street view of houses through which a corridor with shops runs towards the distance, the lower light level in the corridor might look black in SDR. One of the technical goals of HDR would be to keep the look of these shops under better control, but that would involve quite some technical insights to use appropriately compared to the much simpler SDR video handling. In case one was e.g. shooting a cave in SDR, one would during capturing ensure that everything would be nicely, evenly lit, by placing light sources everywhere in the cave. Where the light didn't reach you would get black regions clipped below minimum black where nothing was to be seen, and bright objects like flames could clip above 100% white. In HDR, one of the ambitions one may want to realize with the new technology is to capture, code and communicate, and display real life complexly lit environments realistically almost as they are, or at least better than SDR in simpler variants, but that additional complexity requires a number of new video technologies to get things working fine instead of badly.

In HDR one more specifically wants to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading. **Master** means the starting (typically most important, when having various re-graded images of a same scene) image - in this case best quality grading- which we will optimally grade first, to define the look of this HDR scene image, and from which we can derive secondary gradings a.k.a. graded images as needed. We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in an archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real-world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built an SDR (max. 100 nit) TV which would map equi-luminance, i.e. it would accurately represent all luminances of the master HDR grading it can represent, but clip all brighter object pixel luminances to 100 nit white.

So the usual paradigm in the LDR era was to relatively map, i.e. the brightest brightness (here luminance) of the received image to the maximum capability of the display ("white-on-white", which in the previous century would happen automatically due to the electronic driving of the display). In this manner, e.g. a white bridal gown would look nicely white on the LDR display.

As such a white-on-white approach when used for novel HDR images would map 5000 nit by division by 50 on 100 nit, the flames would still be okay since they are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However, this would be at the detriment of everything else becoming quite dark, e.g. the soldier 20/50 nit which is pure black (and this is typically a problem that we see in SDR renderings of such kinds of movie scene). Some more advanced approach would be preferable.

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) luminance down-mapping must be performed in the TV, to make darker pixels which are displayable. E.g. if the display has a (end-user) display maximum luminance ML_D of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a concave shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels separately. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. a sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color C_L (or vice versa) will simply be a vertical shifting, whilst the projection on the chromaticity plane circle (i.e. the proper color of the pixel being its hue and its saturation) stays the same.

If it is now possible to down-grade with one (or more) luminance mapping functions (the shape of which may be optimized by the creator of the video(s)), in case one uses invertible functions one can design a more advanced HDR codec.

Instead of just making some final secondary grading from the master image, e.g. in a television, one can make a lower dynamic range image version for communication, **communication image Im_comm.** We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for actually communicating an image of a higher dynamic range (DR_H, e.g. spanning from 0.001 nit to 5000 nit) is an image of a different, lower dynamic range (DR_L).

Interestingly, one can even elect the communication image to be a 100 nit LDR (i.e. SDR) image, which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this by SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display adaptation there is no requirement of exact inversion as there is for reconstruction), will now have to be scaled to be somewhat less steep (i.e. from the reference decoding function FL_dec a **display adapted** luminance mapping function FL_DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for display adaptation are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays even for basic movie or television video content (LCD tv, mobile phone, home cinema projector, professional movie theatre digital projector), and more video different sources and communication media (satellite, streaming over the internet, e.g. OTT, streaming over 5G), but also did we get more production manners of video. In the future it is even expected that such applications as virtual reality may become more commonplace (in which the video information may be communicated as image-defining or 3D environment-defining assets rather than typical MPEG data), but e.g. when watching a video or game with a vizor, HDR techniques like the present will still be important, if not even more important when having more realistic image environments close to the eyes.

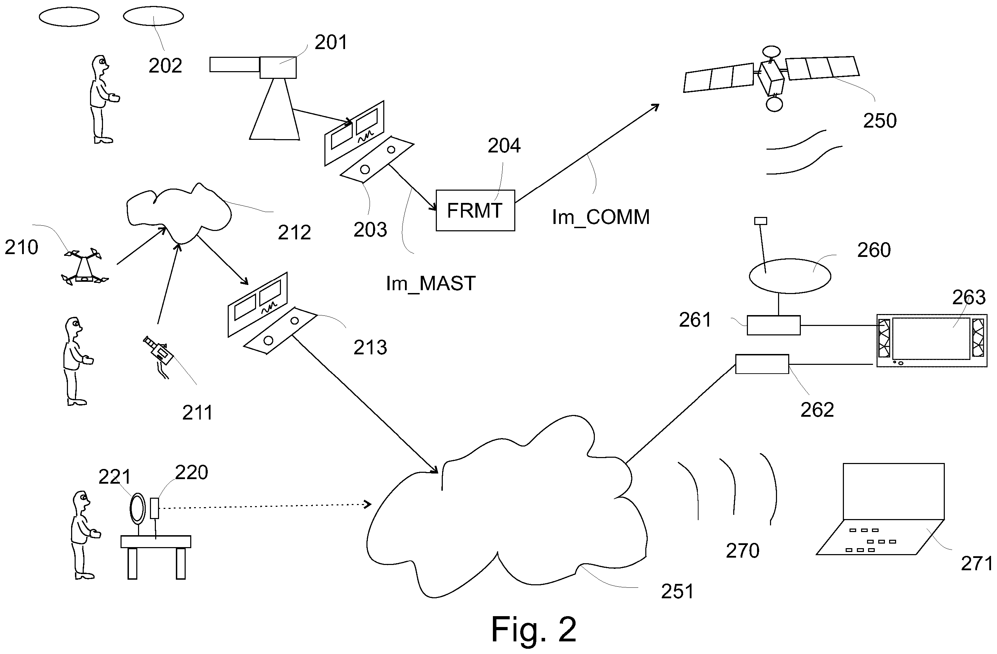

**Fig. 2** shows -in general, without desiring to be limiting- a few typical creation and communication scenarios of video wherein the present teachings may be usefully deployed. We merely elucidate the possible uses by examples, and in actual systems further components may be present such as aggregators, or re-distributors (which might apply transcoding), which may collect various life or prepared content.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spotlights. There will be a number of bulky relatively stationary television cameras (201). Variations on this often real-time broadcast will be e.g. a sports show like soccer, which will have various types of cameras like near-the-goal cameras for a local view, overview cameras, drones, etc. In a biking competition cameras may be traveling on motorcycles and driving into dark tunnels etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

Typically, there will be a final product image (e.g. correctly brightness and color graded, for consumption in typical viewing scenarios), which is the master image Im_MAST. It may be that this master image itself is sent to any receiver, e.g. an end-consumer television display. But oftentimes colorimetrically and/or as regards signal format or definition, a different representative image or video is sent, the communication image Im_COMM. E.g. some backwards compatible systems, for broadcasters which still have many customers with legacy SDR televisions, may calculate an SDR proxy communication image(s) representing the master HDR image(s). These images will then be associatable with, usually co-communicated, brightness mapping function metadata, so that the receiving side can create higher dynamic range images again, e.g. reconstruct a close approximation (except for e.g. some minor quantization or compression artefacts) of the original master images.

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have, e.g. when making a vlog, a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

Another user may be viewing the video content on a portable display (271), such as a laptop (or similarly other users may use a non-portable desktop PC), or a mobile phone etc. They may access the content over a wireless connection (270), such as Wifi, 5G, etc.

Current professional reference displays for viewing created video can go as high as ML_D = 10,000 nit. Even in the consumer arena, recently a 10,000 nit television has been demonstrated. So, if things evolve beneficially, we may see high quality HDR imagery being commonplace in various applications on not too long term. Note that cameras don't actually capture exact luminances, but rather relative brightnesses of a scene (due to the arbitrary selection of iris etc.), however, they have no problem capturing high dynamic ranges nowadays. Even standard cameras can at least faithfully capture 14 powers of two of differential brightness in a scene, and more advanced cameras with specialized sensor construction, or techniques such as multiple exposure can go well beyond this (e.g. 20 powers of two, which is a quite reasonable capturing dynamic range for most situations).

So it can be seen that today, various kinds of video, in various technical codings, can be generated and communicated in various manners, and our coding and processing systems have been designed to handle substantially all those variants. Whereas HDR started out in classical video image communication (a ready-graded 2D array of pixel colors called the image essence), it is foreseen that in the future HDR will move into more general applications of watchable content, such as web applications, virtual reality worlds (for a vizor), etc. In these applications instead of pixel arrays the various components of a scene, environment or world may come as (partial) **visual assets** (e.g. a texture to be mapped onto a geometrical shape, e.g. a set of triangles, or a User Interface or other graphics icon, etc.), to be composed e.g. on-the-fly, either in a server or in a user's terminal device (e.g. a mobile phone).

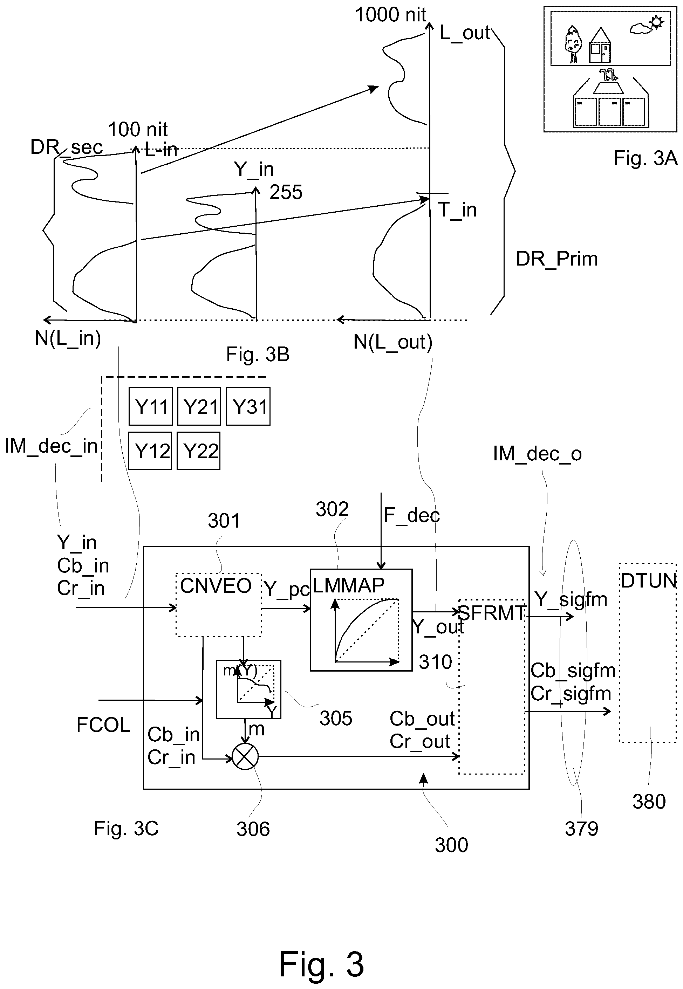

**Fig. 3** (comprising Figs. 3A, 3B, and 3C) shows an example (color mapping circuit variant) of an absolute (nit-level-defined) **dynamic range conversion circuit 300.** It is in this example used in a decoder, and more specifically (for elucidation, without limiting) for an application where an SDR proxy plus metadata comes in as a coding of a HDR image or video of images, which HDR image is to be reconstructed by using this dynamic range conversion circuit. So the circuit will do luminance up-conversion from luminances along a lower dynamic range to output luminances along a higher dynamic range (e.g. that of the original master HDR image, or of a HDR end-user display, which has a higher maximum luminance than the e.g. 100 nit of the SDR input image(s)). Primarily the circuit will take care of the (relative respectively absolute) mapping of the pixel brightnesses, and preferably in a manner so that the SDR image and the HDR image are agreeable differently graded looks of the same scene image, according to e.g. a human color grader, since typically the decoding/up-mapping function F_dec will (that is, in a scenario of SDR to HDR mapping) be a convex function which gives the brighter object colors an extra boost compared to the darker image colors, specified according to the desiderate of the color grader and typically co-communicated in metadata of the image. In general this function F_dec, although we elucidated with a simple typical example of its shape, may define any re-distribution of the various luminances of the different image objects (e.g. maintaining a certain contrast in a mist cloud in the image, etc.). Typically it will be challenging to squeeze a large set of pixel luminances in a smaller one, especially when wanting to make the two images (of course not identical but) looking reasonably similar, i.e. the lower dynamic range grading still conveying some of the desired intra- and inter-object contrast, but up-grading to the correct corresponding HDR image is also far but a trivial task (certainly not a linear stretch).

There can also be communication-and reception (decoding) scenarios where a **higher** dynamic range image (e.g. of a pair of differently graded images of different maximum luminance) is received and a lower dynamic range version of the pair has to be calculated (in which case the down-grading luminance or luma mapping function will be essentially concave).

It is important that the reader well understands what is a (de)coding (as contrasting to other aspects of HDR image handling, such as e.g. the optimization before displaying of an image, after being decoded), and how an absolute HDR image, or its pixel colors, is different from a legacy SDR image.

Although in some embodiments it may be beneficial to combine the two color operations of decoding and adaptation (although in other colorimetric technical formulations that should not be done, as it may lead to technical issues), there is a possible second processing step after decoding per se -which is a different technical thing- namely, there may be a connection from the output of the decoder carrying the decoded HDR image to a **display adaptation** circuit 380, which calculates ultimate pixel colors and luminances to be displayed at the screen of some display, e.g. a 450 nit tv which some consumer has at home (so this may involve down-grading from a reconstructed 1000 nit HDR image). The decoding is in general the standard process, which (apart from luma to luminance conversion and the like) for two-grading HDR systems typically involves the straightforward calculation of the secondary grading from the received pixel colors of the primary grading, by applying the received one or more luma or luminance mapping functions, whereas the display adaptation typically caters for various display capabilities, and involves the calculation of a secondary, display-specific luma mapping function based on the typically in metadata received luma mapping function (which guides what luminance re-distribution is optimal for the given HDR scene type image according to the creator/encoder). Although there are various standards specifying how to encode, and thereafter decode, a HDR image, the decoding will typically follow the standardized process. The display adaptation may be various, since various manufacturers may use their own techniques to produce a tertiary grading optimized for their display, ranging from e.g. a very coarse display-internal luminance mapping based only on the metadata co-communicated target display white point luminance of the video, to highly advanced adaptations carefully taking into account how the grading of various parts in the HDR image (e.g. regimes) is done between e.g. two reference gradings, and how it should be done by adjusting those functions to obtain a tertiary grading.

In absolute HDR, one can establish pixel luminances already in the decoding step, at least for the output image (here the 1000 nit image).

We have shown this in **Fig. 3B****,** for some typical HDR image being an indoors/outdoors image (the geometry and comprised image objects of which are shown in Fig. 3A). Note that, whereas in the real world the outdoors luminances may typically be 100 times brighter than the indoors luminances, in an actual master graded HDR image it may be better to make them e.g. 10x brighter, since the viewer will be viewing all together on a screen, in a fixed viewing angle, even typically in a dimly illuminated room in the evening, and not in the real world.

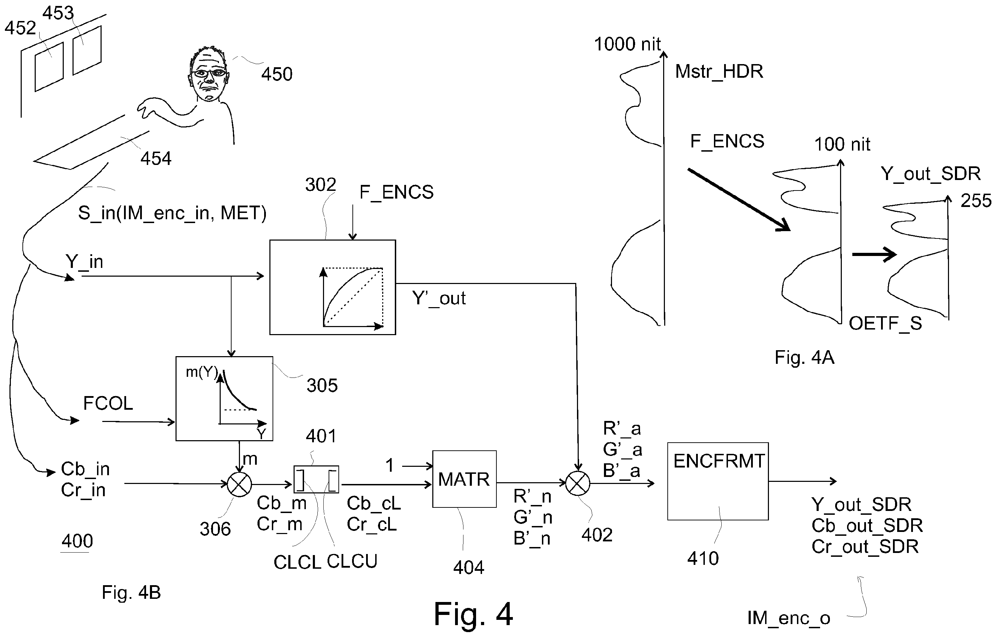

Nevertheless, we find that when we look at the luminances corresponding to the lumas, e.g. the HDR luminances L_out (e.g. of a reconstruction from an SDR proxy image as received), we typically see a large histogram (of counts N(L_out) of each occurring luminance in an output image of this homely scene). This spans considerably above some lower dynamic range lobe of luminances, and above the low dynamic range 100 nit level, because the sunny outdoors images have their own histogram lobe. Note that the luminance representation is drawn non-linearly (e.g. logarithmically) for convenience, since we need not details the specific numerics which depend inter alia on which image is being decoded, and otherwise given the large differences some graphs wouldn't fit on the page. As explained below with Fig. 4, for a typically invertible system, the encoder would do at the encoding side the opposite mapping, when making the 100 nit proxy image (having its histogram of proxy luminance counts N(L_in)) of proxy luminances L_in. Also shown are the **lumas** Y_in, the value of which will also depend on the elected EOTF or OETF defining the relationship between lumas and luminances. Although some image communication systems may communicate other color triplets, e.g. non-linear R'G'B', typically receivers will receive some {Y, Cx, Cy} pixel color definition, wherein Y is the luma (and Cx and Cy are some definition of chroma, e.g. Cb and Cr, or Cp and Ct etc.).

**Fig. 3C** shows a possible color calculation framework/circuit for decoding communicated HDR images which in fact code a primary image (e.g. a master HDR grading) having a primary luminance dynamic range (DR_Prim), but by actually communicating another image (so-called proxy) with a different typically lower secondary range of pixel luminances (DR_Sec). It may be advantageous to use as a proxy a 100 nit ML image, since then dumb legacy displays can simply display it yielding good or at least reasonably image object colors and brightnesses. If the encoder and all its supply-able decoders have pre-agreed or know that the proxy image has a maximum luminance of 100 nit, this need not be communicated as an SDR_WPL metadatum. If the proxy image is e.g. a 200 nit maximum image, this will typically be indicated by filling its proxy white point luminance P_WPL with the value 200, or similarly for 80 nit etc. The maximum of the primary image (HDR_WPL= 1000), to be reconstructed by the dynamic range conversion circuit, will normally be co-communicated as metadata of the received input image, or video signal, i.e. together with the input pixel color triplets (Y_in, Cb_in, Cr_in). The various pixel lumas will typically come in as a luma image plane, i.e. the sequential pixels will have first luma Y11, second luma Y21, third luma Y31, and one pixel row below fourth luma Y12 and fifth luma Y22, etc. (same for the chroma components). Typically these color code values will be scanned, e.g. by means of a zig-zag scan, and the dynamic range conversion circuit will convert pixel by pixel to output pixel color triplets (Y_out, Cb_out, Cr_out). In other applications/embodiments of HDR image or video generation or communication systems, the input image for the decoder IM_dec_in might e.g. be an intermediate dynamic range image, and conversion may be up-conversion or down-conversion. The image may therefore typically be associated with, and communicated in a signal comprising, metadata, which may be so-called dynamic metadata in that it is separately optimizable per image (i.e. per image display time) or at least per set of images of a same scene. That dynamic metadata is the best manner to describe and process HDR images can be understood from the following example. If a first image comprises bright objects of say above 1000 nit, it may need a compressive luminance mapping function, to fit the bright objects into a e.g. 200 nit maximum output luminance range, and also luminances below 100 nit may need to compress to make some extra room for the brightest pixel luminances in the smaller range (depending on what exactly is in those pixels: a TL tube on the ceiling could be mapped to a single 100 nit value, but bright light effects like plasma clouds may need a more careful mapping). If the next scene is of a dark environment, and contains only pixels below 50 nit, that might well be mapped with an identity transform instead of a compressive function. Also, the resultant mapping in an outdoors scene of something seen indoors may depend on the exact type of scene and desiderata of the creator. If one must be able to see what is happening inside, one may use a function which implements a brightening of the darks, so that in the narrow output luminance range all pixels are e.g. brighter than 20 nit, whereas if it is a small hole in a temple in a larger environment, one may want to map all indoors pixels to perfect black (zero nit). The various embodiments may yield as decoder output image IM_dec_o either a pure reconstruction of the e.g. 5000 nit master grading made at the creation side, or some display adapted image optimal for display on say a 700 nit maximum capability display.

We will primarily focus on the brightness dimension of the pixel colors in this elucidation, unless certain chromatic aspects of the innovation are important. Various embodiments of the chromatic processing can typically be summarized as a combination of on the one hand taking into account needed chroma adjustment on the count of having different pixel brightness in the output image compared to the input brightnesses, and on the other hand desired chroma changes (e.g. if some color cannot reach a desired brightness in a lower dynamic range image, one may want to boost its saturation to still make it look flashy). Various dynamic range conversion circuits may internally work differently, to achieve basically the same thing: a correctly reconstructed output luminance L_out for all image pixels (the actual details don't matter for this innovation or a general HDR framework introduction, and the embodiments in this application will focus on teaching only aspects as far as needed).

The mapping of luminances from the secondary dynamic range to the primary dynamic range may happen on the luminances themselves, but also on any luma representation (i.e. according to any EOTF, or OETF). If one knows how luminances correspond to lumas (potentially by two different EOTFs for input and output) one can calculate in a circuit a mapping of luminances as a mapping of lumas, or vice versa. The internal luma representation need not even be the one of the input (i.e. of Y_in), or for that manner of whatever output the dynamic range conversion circuitry or its encompassing decoder may deliver (e.g. a format luma Y_sigfm for a particular communication format or communication system, "communicating" including storage to a memory, e.g. inside a PC, a hard disk, an optical storage medium, etc.). E.g. a popular input EOTF for HDR images is PQ, but applicant may want to use in its internal calculations its own (perceptually uniformized) PU OETF (see eq. 1), a.k.a. SMPTE 2094-20 or Philips OETF.

We have optionally (dotted) shown a luma conversion circuit 301, which turns the input lumas Y_in into perceptually uniformized lumas Y_pc.

Applicant standardized in ETSI 103433 a useful equation to convert luminances in any range to such a perceptual luma representation: [Eq.1] $Y_pc = log_ 10 \left\{1+\left[RHO\left(WPL_inrep\right)-1\right]*power\left(Ln_in;1/\left(2.4\right)\right)\right\} / log_ 10 \left\{RHO\left(WPL_inrep\right)\right\}$ In which the function RHO is defined as: [Eq. 2] $RHO \left(WPL_inrep\right) = 1 + 32 * power \left\{\left(WPL_inrep/10000\right);1/\left(2.4\right)\right\}$

Ln_in are the normalized linear luminances. We will assume for the elucidation this equation is used, although other equations are possible converting to a somewhat different perceptually more uniform luma domain. It is shown dotted, as this is an optimal step/circuit, since one can also decide to do the color transformation in another color representation domain (or often the pre-mapping may be incorporated in the e.g. luma mapping **LUT (Lookup Table)** of luma mapping circuit 302, which will then get the original input as input). In general there can be three different luma domains/definitions, input luma, internal or calculation luma, and output luma, but those may be all in the same domain, e.g. PQ luma.

The value WPL_inrep is the maximum luminance of the range that needs to be converted to psychovisually uniformized lumas, so for the 100 nit SDR image this value would be 100, and for the to be reconstructed output image (or the originally coded image at the creation side) the value would be 1000.

Ln_in are the luminances along that whichever range which need to be converted, after normalization by dividing by its respective maximum luminance, i.e. within range [0,1].

Once we have an input and an output range normalized to 1.0, we can apply a luminance mapping function actually in the luma domain (i.e. in this embodiment the PU luma domain), as shown inside the luma mapping circuit 302, which does the actual luma mapping for each incoming pixel.

Note that the exact shapes of the function (once being determined as a desired well working function for the luminance contents of objects in any particular HDR scene image) depends on the one hand which respective maximum luminance ML has been used for the normalization, and on the other hand which EOTF or OETF was elected for representing luminances as lumas, e.g. perceptually uniform lumas, but the essence of the story, and the technical components, in general stays the same; at least in the systems of applicant which can handle various technical formats or desiderata; the skilled person should have no trouble changing the locus of points on a luminance mapping curve in one representation, say normalized linear luminances, to corresponding point on a re-shaped curve if one or both of the coordinate axis change to a fixed re-definition, e.g. Y_p=OETF(L_lin).

In fact, this mapping function had been specifically chosen by the encoder of the image (at least for yielding good quality reconstructability, and maybe also a reduced amount of needed bits when MPEG compressing, but sometimes also fulfilling further criteria like e.g. the SDR proxy image being of correct luminance distribution for the particular scene -a dark cave, or a daytime explosion- on a legacy SDR display, etc.). So this function F_dec (or its inverse), to be applied at least on the currently being decoded (and potentially further display adapted or optimized), will be extracted from metadata of the input image signal or representation, and supplied to the dynamic range conversion circuit for doing the actual per pixel luma mapping. In this example the function F_dec directly specifies the needed mapping in the perceptual luma domain, but other variants are of course possible, as the various conversions can also be applied on the functions. Furthermore, although for simplicity of explanation, and to guarantee the teaching is understood, we teach here a pure decoder dynamic range conversion, but other dynamic range conversions may use other functions, e.g. a function derived from F_dec, etc. The details of all of that are not needed for understanding the present innovative contribution to the technology.

In general one will not only change the luminances, but there will be a corresponding change in the chromas Cb and Cr. That can also be done in various manners, from strictly inversely decoding, to implementing additional features like a saturation boost, since Cb and Cr code the saturation of the pixels. Thereto another function is typically communicated in metadata (recoloring specification function FCOL, which may in a number of advantageous embodiments be a color LUT (C-LUT)), which determines the chromatic recoloring behavior, i.e. the mapping of the blue chroma Cb and the red chroma Cr (note that Cb and Cr will typically be changed by the same multiplicative amount, since the ratio of Cr/Cb determines the hue, and generally one does not want to have hue changes when decoding, i.e. the lower and higher dynamic range image will in general have object pixels of different brightness, and oftentimes at least some of the pixels will have different saturation, but ideally the hue of the pixels in both image versions will be the same). The Cb and Cr may be in different domains depending on the input (e.g. Rec. 709, or PQ), but will be in the same domain as the luma. This recoloring specification function FCOL will typically specify a multiplier which has a value dependent on a brightness code Y (which will then for each pixel be filled in by its brightness code, e.g. its input luma Y_in or the perceptually uniformized Y_pc, or other luma codes in other variants). This is because on the one hand chromas are defined in a brightness-dependent manner, but on the other hand they also code for the saturation of a pixel color, so the creator of the image and the recoloring specification function FCOL may want to play on both aspects, but, specifically either keep the saturation of image pixels unchanged, or alternatively not unchanged. A multiplier establishment circuit 305 will yield the correct multiplier m for the brightness situation of the pixel being processed, i.e. the multiplier m is actually a function of the pixel luma: m(Y), e.g. m(Y_in). A multiplier 306 will multiply both Cb_in and Cr_in by this same multiplier, to obtain the corresponding output chromas Cb_out= m*Cb_in and Cr_out=m*Cr_in. So the multiplier realizes the correct chroma processing, therefore the whole color processing of any dynamic range conversion being correctly configurable in the dynamic range conversion circuit.

Furthermore, there may typically be a formatting circuit 310, so that the output color triplet (Y_out, Cb_out, Cr_out) can be converted to whatever needed output format (e.g. an RGB format (e.g. an RGB format that a display may require), or a communication YCbCr format, Y_sigfm, Cb_ sigfm, Cr_sigfm). E.g. if the circuit outputs to a version of a communication channel 379 which is an HDMI cable, such cables may use PQ-based YCbCr pixel color coding, ergo, the lumas will again be converted from the perceptual domain to the PQ domain by the formatting circuit. Note that although we have shown a circuit that processes to Cb_out and Cr_out, and then processes further on the basis of those color components, that is in no means a limitation (of this mere elucidation). One can also make corresponding circuits which convert after the multiplication of the input chromas to the RGB domain, and then do further processing (e.g. luminance scaling; and output formatting; and possibly the display adaptation, which however often being a separate circuit may elect its own internal representation for calculation) on those RGB colors (linear or non-linear RGB).

**Fig. 4** shows one of the possibilities for realizing a pragmatic circuit for processing the pixel colors (400) for a luminance mapping of a dynamic range change, now applied in an **encoder** (/encoding application). This exemplary elucidation circuit converts internally to RGB, and does the correct brightness scaling on the RGB components (with a same, common scaling multiplier), rather than in the YCbCr domain (as was in this example the color domanin of the encoder input image IM_enc_in, which may be separate or bundled together with metadata MET such as the FCOL function in an input signal S_in). Typically all that information comes from another circuit, e.g. inside a computer of a grading system. The enconding circuit can sometimes be interchanged with the example of Fig. 3, i.e. both encoder and decoder can opt for either one (or more advanced circuits, which e.g. do special differential processing of the high brightness colors, or some other regions of the image, etc., as these examples are merely given to teach the basics as far a required or useful for understanding the below innovation concepts). At the output if the encoder an output image IM_enc_o is output with the appropriate pixel colors given the application the encoder is used in, e.g. stored, directly communicated (after signal formatting, frequency conversion or whatever may be needed for the communication), etc.

The luminance mapping now goes in the opposite direction, i.e. a down-mapping (luminance-compressive mapping) is shown in Fig. 4A. Although variants may perform e.g. operations in one go (e.g. by means of a luma mapping LUT), we elucidate two steps: first HDR pixel luminances are converted to SDR luminances. A color grader 450 may use his insights to determine an optimal luma mapping function F_ENCS. How precisely this will happen, and according to which criteria (which is a detail beyond the scope of this patent application, for which it is sufficient that there is a function), will depend on whether we have an offline grader for creating e.g. a Hollywood studio movie for a blu-ray disk, versus some shader in a production booth optimizing a real-time program. But criteria can be e.g. to keep sufficient intra-object contrast for the two regions (histogram lobes) of differential brightness, i.e. indoors and outdoors, whilst also trying to keep some ratio of their average luminance and/or some scarce or unused values in between the two lobes. More complicated HDR scenes may involve all kinds of further considerations, but these will be reflected in the elected shape of the function F_ENCS (i.e. the specifically elected output value for any possible input value). The color grader may use input sensors (454) such as a keyboard, trackball and the like (which is known in the field), and watch his results on one or more displays. E.g. a first HDR reference monitor 452 may show the up to 1000 nit pixel colors of the master image (Mstr_HDR), and a second HDR reference monitor 453 may be set in SDR mode, meaning it will not display pixels brighter than 100 nit (but e.g. clip to 100 nit), and then if so desired the grader can watch the correspondence of the SDR, and what that SDR can still convey versus the original Mstr_HDR side by side (in other productions the grader may feel e.g. too influenced by the HDR image, and if his main audience still desires to receive the SDR proxy which should be of best quality, then the grader may be looking only at the SDR video). Note that much of the determination of the luma mapping function F_ENCS may in some systems (particularly real-time productions) be happening under control of an automaton, but then the grader may still use a few buttons to impose a few basic tweaks of his production, e.g. make it somewhat brighter than what the automaton comes with.

Once having squeezed the HDR 1000 nit ML luminances (and in fact colors) into the SDR 100 nit ML luminances for the proxy image, the second step is converting them to output lumas Y_out_SDR using an OETF, here the SDR OETF OETF_S which may typically be the standard Rec. 709 OETF, so that those lumas can be coded into an image in a straightforward known manner (e.g. the Y, Cb and Cr arrays will get compressed using any MPEG standard, then packetized, and then communicated over some communication protocol, or stored using some existing and decodable data or file format). We have shown a typical legacy compliant 8 bit output format, but 10 bit SDR may nowadays also be communicated (it is better to use at least 10 bit or more for communicating HDR quality videos, but some systems still demand the adherence to 8 bits per color component). We have shown a simplified version. In practice in at least some HDR coding or communication systems there may be several conversions, e.g. the Y_out_SDR may be converted to yet another definition/representation before actually communicating to at least some of the prospective receivers etc.

**Fig. 4B** shows the per pixel processing (i.e. calculations similar to what was taught with Fig. 3, but for per-lower-DR-proxy systems typically in the inverse mapping direction; note that there could also be encodings straight to PQ as alternatives, and then e.g. only OETF-conversion may be required for the pixel colors) for this exemplary calculation circuit embodiment. We can assume the input color coding (Y_in, Cb_in, Cr_in) is in PQ format. Luma mapping circuit 302 and multiplier establishment circuit 305 will work largely similar as explained for the decoding in Fig. 3, but now the appropriate functions will be used for down-mapping, e.g. the luma mapping circuit will use a concave function which typically (as essential primary behavior upon which one can vary) relatively boosts the darker input lumas and compresses i.e. dims the brighter lumas, to squeeze everything in the smaller output dynamic range (typically without any or significant clipping, since one wants to revert the mapping in a decoder). Multiplication circuit 306 will again do the chroma correction by multiplying both input chroma components Cb_in and Cr_in by the applicable multiplier m for the pixel luma.

The luma mapping circuit 302 will yield an output typically in a luma domain, i.e. an output luma (Y'_out), and it may be advantageous to use the same domain as at its input (i.e. e.g. both PQ lumas, both perceptually uniformized lumas, etc.). Conversion to final output lumas in the Rec. 709 format or domain can then be handled by the encoder-formatter 410 doing the last processing steps. It will typically take care of converting the pixel colorimetric coding to the desired output format (here e.g. SDR chromas Cb_out_SDR and Cr_out_SDR and output luma Y_out in the Rec. 709 format, but other encoders may yield e.g. non-linear RGB' output, etc.). Typically encoder-formatter 410 may also do other expectable processing from video coding tech to yield the output as desired, e.g. it may sub-sample the chroma arrays, apply DCT transformation and entropy coding, and even map to a signaling frequency constellation and do encryption, etc. (which is also beyond the scope of this patent application)

Chroma a.k.a. chrominance components (so also input blue chroma Cb_in, and input red chroma Cr_in) are defined based on the luma: [Eq. 3] $\begin{matrix}Cb = k * \left(B′-Y\right) \\ Cr = l * \left(R′-Y\right)\end{matrix}$ wherein k and l are constants depending on the color coding definition (standard).
This means one can also define them in relation to the non-linear RGB' coefficients by means of a fixed matrix: [Eq. 4] $\left[Y; Cb; Cr\right] = \left[n11 n12 n13; n21 n22 n23; n31 n32 n33\right] \left[R′; G′; B′\right]$

E.g., in SDR, the OETF for calculating the non-linear values is approximately a square root, ergo the non-linear R' value is the square root of the linear R-component contribution to the additive color mix, etc. [Eq. 5] $Luma is defined as Y = a * R ′ + b * G ′ + c * B ′$ wherein the constants a,b, and c depend on the elected additive primaries of the color definition (e.g. EBU CRT phosphor primaries used from the legacy times).

After multiplying in the first multiplication circuit 306, multiplied chroma Cb_m and Cr_m are typically clipped between lower clipping constant CLCL and upper clipping constant CLCU. These may be given values equal to -0.5 and 0.5 for a normalized (brightness-independent) YCbCr coding in which the luma entering the matrix calculation circuit 404 is always equal to 1.0, irrespective of what value the input luma Y_in had (this normalization is effected by giving the multiplier establishment circuit 305 the appropriate color LUT (C-LUT), which is typically implemented by making the first multiplication a normalization of the type: [Eq. 6] $\begin{matrix}Cb_m = m * Cb_in = m_sat \left(Y_in\right) * Cb_in / Y_in ; \\ Cr_m = m * Cb_in = m_sat \left(Y_in\right) * Cb_in / Y_in\end{matrix}$ wherein m_sat(Y_in) is a factor which can be set to make e.g. the darkest colors a little more saturated than at the input, or the brighter colors a little less saturated, etc. From metadata loadable color function or LUT FCOL will specify this multiplicative recoloring behavior for each possible input pixel luma, i.e. m(Y).
So clipper 401 yields clipped chroma components Cb_cL and Cr_cL: [Eq. 7] $\begin{matrix}Cb_cL = CLIP \left(CLCL; Cb_m; CLCU\right) ; \\ Cr_cL = CLIP \left(CLCL; Cr_m; CLCU\right)\end{matrix}$

Note that there may be other definitions involved in the actual processing internals, but this elucidation just teaches the bigger picture of the color mapping and coding approach.

Matrix calculation circuit 404 is used to convert the normalized YCbCr color coding into a normalized RGB' color coding. It will use the inverse matrix of the n-matrix of above Eq. 4.

Finally the brightnesses of the pixels are correctly scaled to the output domain, i.e. corresponding to the maximum luminance ML of the output image, which in this elucidation example is an SDR image (i.e. backwards compatible because displayable on legacy LDR displays).
This is effected by using a second multiplier circuit 402 for scaling by whatever output luma Y'_out the luma processing track yielded for the pixel, so we obtain non-linear scaled RGB' components (R'_a, G'_a and B'_a) on the basis of the normalized RGB' components R'_n, G'_n and B'_n: [Eq. 8] $\begin{matrix}R ′ _ a = L ′ _ out * R ′ _ n ; \\ G ′ _ a = L ′ _ out * G ′ _ n ; \\ B ′ _ a = L ′ _ out * B ′ _ n\end{matrix}$

Coding and communication systems, or luminance mapping processing units, of the type as explained above, e.g. of applicant or other similar systems, are in practice working sufficiently well, and currently many HDR movies and other video content are being distributed to consumers over such transfer media as e.g. blu-ray disk, subscription to a movie delivery mechanism such as Netflix, being broadcasted over the airways, etc., and various receiving devices like television displays and mobile phones are capable of receiving, decoding, optimizing, and displaying such HDR video or still image content.

However, actual technical realizations can always be improved in some aspect.

It can be seen in practice that doing mappings between different gamuts, in particular if one tries to make the colors in the smaller gamut with lesser maximum brightness look relatively similar to the colors in the HDR image and its gamut, or at least realistic, it is much easier to do things right than wrong (for various reasons; e.g. inter- or intra-object contrasts may be unrealistic, the saturation of object colors may be wrong, etc.).

On the one hand it is sometimes already quite beautiful to only raise the brightness of a couple of pixels above the upper limit of the SDR gamut. E.g., a legacy SDR image will look too SDR-ish because the pixels of a light source, say a TL tube, are clipped to relative dim 100 nit SDR white (or something similar for other gradings of lower maximum luminance, e.g. a 200 nit max grading). If one were to boost the luminance of those pixels by e.g. 10x, or even 5x, one would already see a much nicer picture. But those colors do not exist (cannot be defined) in the 100 nit maximum SDR gamut or color representation. However, it is easy to define them in a HDR color definition or gamut which can encode colors up to 1000 nit for white. And it would, for such a relatively simple image in which there is only a set of pixels having say the same 1000 nit luminance, to map between the SDR and HDR grading, since one just needs to implement -e.g. as a luminance mapping function- a processing which multiplies respectively divides only the TL tube pixels by a factor 10, and leaves the other pixels with the same luminance (possibly there may be a calculation of different color codes involved, e.g. 10 bit YCbCr values, as the SDR image may be defined in Rec. 709, and the HDR image in PQ or HLG).

But in general a (challenging, but on the other hand also visually impressive) HDR scene image may contain whatever pixel colors. Some images of say a souk may have various regions ranging from very bright regions lit by sunbeams piercing through holes in the roof, whereas other regions may be in dark shadows. E.g. a challenging image has on the left an open door which shows a white angle in a brightly lit environment, and on the right an open door with a black demon in a dark corridor. Things can become even more challenging if there are textures requiring precise rendering of inter- and intra-object contrast in regions which have illumination of illuminance values between that brightly lit and darkened region. Things can become more complex when colors are involved. E.g. some images may have impressive color gradients of say a sunset. An environment lit solely by a bright color display may pose its challenges for mapping to especially low maximum luminance ranges, and similarly can discos with colored spotlights be challenging. Some colors like e.g. blues or purples may be particularly challenging, and the creator of the image or video may have specifically included e.g. bright purple TL tubes in his scene. And all of that should better be processed as good as possible, ideally without making any errors (e.g. due to the coding and decoding process), or at least making as few and as small errors as possible.

In principle the chromatic saturation extent of the color gamut (a.k.a. "wide gamut") and the maximum brightness, typically in most coding systems a maximum luminance, i.e. the vertical extent (height) of the gamut, are independent aspects of a color definition, or a production of images. However, many users of the technologies would like to see more saturated colors at the same time as brighter colors, if they are already going to the trouble of producing new technical gradings (or systems) having better colors and more visual impact. However, choices of processing in the saturation direction can have significant impact on the resultant position of output colors in the vertical/brightness direction, and vice versa. That is not a trivial problem (not only because human color vision is non-linear, but already the math of even the simpler color representations can quickly become difficult), so there is no simple settled solution.

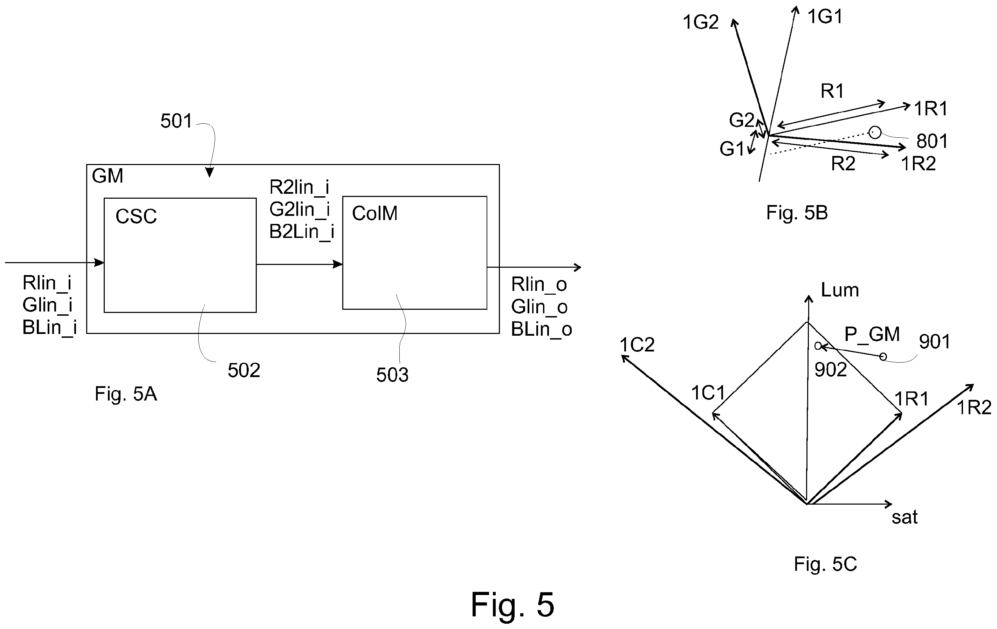

**Fig. 5** elucidates what a gamut mapping would typically do, and we will shortly explain the properties and problems.

Until now, the explanations with Figs. 3 and 4 have focused mainly on the brightness aspects of the coding or in general processing of HDR pixel colors. Indeed High Dynamic (Luminance) Range is primarily about lighter and darker regions of the image, although one cannot ignore the chromatic aspects of the image unless dealing with a black and white image. This would occur for systems which e.g. create a master HDR grading image in say a 1000 nit maximum luminance Rec 709-spanned gamut (i.e. with the red, green and blue primaries as defined in Rec. 709, following the EBU primaries), and mapping the input colors to output colors in e.g. a 100 nit SDR gamut, but still chromatically extending to the Rec. 709 RGB primaries. That can be represented by two tent-shaped gamuts, one higher one and one lower one, but the sides and bottom plane (whether circular or triangular) of which are identical. So there needs to be only color shifts in the vertical brightness increase or decrease direction. There can however be scenarios, e.g. in HDR video broadcasting, wherein the master HDR image is e.g. made in Rec. 2020 color space, and indeed contains colors beyond the gamut boundaries i.e. non-existent in Rec. 709, however, the communication system requires or expects a Rec. 709-defined coded image for communication to receivers. One then must in one way or another convert the Rec. 2020 image into a Rec. 709 image, be it as blunt to clip any e.g. RGB or YCbCr value to its largest value possible in the smaller gamut (making several originally different colors map to the same Rec. 709 gamut boundary color, i.e. introducing visible color errors in the communication image, and, anything that can be reconstructed out of it).

Fig. 5A shows generically a (chromatic) gamut mapping apparatus 501, which conceptually consists of two parts (which may in actual realizations be performed as two sequential processing steps or units, whereas in other realizations they may be performed in 1 processing, e.g. by applying some gamut mapping algorithm, or even a 3D LUT representing the mapping results of the algorithm).

The first unit is a color space converter (502), which merely calculates the color coordinates in the second, narrower basis spanned by primary vectors 1R1, 1G1 and 1B1 (not shown), i.e. calculates (R1, G1, B1), from as input the broader basis coordinates defined in broader primary vector basis (1R2, 1G2), i.e. (R2, G2, B2).

Since color space conversion is just linear vector algebra, the coordinates in the second basis are calculable from the first triplet of coordinates by a fixed matrix, which has values depending on the elected 2 triplets of primaries: [Eq. 9] $\left(R1, G1, B1\right) = \left(mRR, mGR, mBR; mRG, mGG, mBG; mRB, mGB, mBB\right) \left(R2, G2, B2\right)$

It can be seen (in Fig. 5B) that for some saturated color 801 in the wider gamut, although the original coordinates R2 and G2 are positive, in the narrower basis there may be negative coordinates e.g. a negative G1. This is a mathematical aspect, since in any real additive system, the coordinates (which represent an amount of energy one has to give the primary light source to create the correct mix color) must be positive. What this means physically is that we are dealing with an out of gamut color as regards the narrower color. Such a color cannot exist (i.e. cannot be created by any additive mix of the primary colors) in the narrower basis. Ergo, some kind of mechanism must be used to determine a corresponding secondary color (R2, G2, B2) which does exist. The default mechanism is to **clip the negative values to zero.** This creates a valid color, since any color coordinate of the triplet must have a value in the range [0, max], where for practical purposes the maximum may be taken as the normalized 1.0. But this clipping creates color errors. The color mix had to add minus G1 to the mix of red and blue, which in practice means mixing in an anti-green light source (which happens to be magenta light), but now with the incorrect green coordinate we do not mix any magenta, or equivalently we have a resultant color which is too greenish.

Ergo, one needs a better quality determination of corresponding in gamut colors, wherein the color is not made too greenish, but e.g. of the same hue yet a little bit less saturated, or maybe also a little bit brighter or darker.

Thereto a color mapping unit 503 is part of the gamut mapping apparatus 501. We show in Fig. 5C how out of gamut colors (e.g. out of gamut color 901) are mapped to colors inside the narrow gamut such as corresponding output color 902, in a typical diamond-shaped slice through a 3D cube gamut. In the vertical direction is the axis of increasing luminance Lum, i.e. ranging from the blacks to whitest or maximum white. In the horizontal direction we have increasing chromatic saturation sat. We show again a slice with the two red basis vectors 1R1 and 1R2, and (although not primary vectors) on the other side we have the red-complementary cyan colors of narrower gamut 1C1 and wider gamut 1C2. There can be many algorithms to actually map the various colors so that out of gamut colors (typically all) end up in-gamut, and we have schematically shown one projection vector P_GM.

Gamut mapping for HDR images (i.e. either between different HDR images, which may typically have a different maximum luminance, i.e. the brightest pixel of one of the HDR image is darker than in the other; or often even more complex between HDR images and SDR representations of those images) can be even more challenging than the various SDR gamut mapping techniques (i.e. mapping between input legacy SDR colors and output legacy SDR colors). Ergo, there have not been invented so many HDR gamut mapping techniques, and some of those can be quite complex, involving lots of math sometimes in psychovisually uniformized color spaces (i.e. wherein a numerical step corresponds to a certain visual color difference, irrespective of whether a change of 3 steps is done for a dark unsaturated color, or a bright saturated color, etc., whereas linear RGB color space for example is not visually uniform).

Applicant's gamut mapper as described in WO2018229145 is both simple calculation effort-wise, yet achieves its goal of being able to code wide (high chromatic saturation) gamut HDR colors as narrow gamut SDR colors in an almost fully invertible manner, however, in about 2% of the gamut, in those regions of colors lying between the triangle points of the narrower gamut and the triangle points of the wider gamut there are some approximation errors that lead to not full invertibility for high quality images such as 10 bit PQ YCbCr. The inventor has found techniques to improve the mapping, so that one get as perfect a wide gamut HDR reconstruction as desired.

### SUMMARY OF THE INVENTION

The accuracy of the previous approach is improved by an apparatus (501) arranged to map three input color components (Rlin_i, Glin_i, Blin_i) defined in an input color primary basis of first saturation (1R2, 1G2) to output color components (Rlin_o, Glin_o, Glin_o) in an output color gamut defined by an output color primary basis of second saturation (1R1, 1G1), wherein at least one of the primary colors (1R1) of the output color primary basis has lower color saturation than a corresponding primary color (1R2) of the input color primary basis, wherein the apparatus comprises:
- a color space converter (502) arranged to calculate intermediate color components (R2lin_i, G2lin_i, B2lin_i) by multiplying a first 3x3 matrix (N) by the input color components, wherein coefficients of the matrix (N) are determined by the input color primary basis and the output color primary basis, wherein the three input color components are color components of an input image (IM_enc_in); and
- a color mapping unit (503) arranged to map the intermediate color components (R2lin_i, G2lin_i, B2lin_i) to the output color components (Rlin_o, Glin_o, Glin_o), wherein the output color components have values between zero and a predefined maximum, wherein the color mapping unit performs:
- establishing a differential gain value diff_gain;
- obtaining weight values for scaling a contribution of an amplitude of a color component which are defined by: $kRG = \left(M\left(1, 2\right)/M\left(1, 1\right)\right) * \left(1/diff_gain\right) / \left(1.0-\left(1/diff_gain\right)\right) ;$ $kRB = \left(M\left(1, 3\right)/M\left(1, 1\right)\right) * \left(1/diff_gain\right) / \left(1.0-\left(1/diff_gain\right)\right) ;$ $kGR = \left(M\left(2, 1\right)/M\left(2, 2\right)\right) * \left(1/diff_gain\right) / \left(1.0-\left(1/diff_gain\right)\right) ;$ $kGB = \left(M\left(2, 3\right)/M\left(2, 2\right)\right) * \left(1/diff_gain\right) / \left(1.0-\left(1/diff_gain\right)\right) ;$ $kBR = \left(M\left(3, 1\right)/M\left(3, 3\right)\right) * \left(1/diff_gain\right) / \left(1.0-\left(1/diff_gain\right)\right) ;$ $kBG = \left(M\left(3, 2\right)/M\left(3, 3\right)\right) * \left(1/diff_gain\right) / \left(1.0-\left(1/diff_gain\right)\right) ,$ wherein the above M(x,y) values are a constant value at position (x,y) of a second 3x3 matrix M which is the inverse of a third 3x3 matrix (X), which is selected from a set of pre-established color space conversion matrices, as a matrix (e.g. which has lowest saturated primaries) from a set of matrices fulfilling a criterion that substantially all colors of an input image (IM_enc_in) lie inside a third gamut defined by the third matrix (relative to the smaller gamut, i.e. the gamut of the gamut-mapped output colors; i.e. the defined gamut is the larger gamut, i.e. the input gamut of a wide-to-narrow color space conversion), and the third matrix converts between that third gamut and the output color gamut;
- setting initial values for three iterated color components (Rt, Gt, Bt) based on corresponding input color components, to create positive values: $Rt = max \left(0, R2lin_i\right) ;$ $Gt = max \left(0, G2lin_i\right) ;$ $Bt = max \left(0, B2lin_i\right) ;$
- performing at least two iterations of the following calculations:
   - determine threshold values for the three color components based on two of the iterated color components which are not the color component that the threshold is for: $Rthr = kRG * Gt + kRB * Bt ;$ $Gthr = kGR * Rt + kGB * Bt ;$ $Bthr = kBR * Rt + kBG * Gt ;$ and
   - performing the following three mapping functions on the input color components: $Rout = Rthr + \left(R2lin_i-Rthr\right) / diff_gain if R 2 lin_i < Rthr$ $Rout = R 2 lin_i if R 2 lin_i > = Rthr ;$ $Gout = Gthr + \left(G2lin_i-Gthr\right) / diff_gain if G 2 lin_i < Gthr$ $Gout = G 2 lin_i if G 2 lin_i > = Ghr ;$ $Bout = Bthr + \left(B2lin_i-Bthr\right) / diff_gain if B 2 lin_i < Bthr$ $Bout = B 2 lin_i if B 2 lin_i > = Bthr ;$ and
   - setting the three iterated color components for the next iteration equal to the output values of the three mapping functions:
      Rt = Rout;
      Gt = Gout;
      Bt = Bout; and
      after finishing the last iteration setting the three output color components (Rlin_o, Glin_o, Glin_o) equal to the corresponding one of the three iterated color components (Rt, Gt, Bt).

Simpler apparatuses may have the largest color primary basis, and consequently the matrix selection fixed, but typically the apparatus may have a capability to select various matrix possibilities. E.g., it may check in metadata associated with the single image, or video (set of images), whether the colors which are coded as Rec. 2020 (container) actually are 2020 colors (i.e. substantially fill the container, having at least some so saturated colors as the 2020 color space and definition allows), or are actually less saturated colors, i.e. saturation-wise all colors lie within the DCI-P3 gamut, although coded as Rec. 2020 colors (i.e. having different numerical RGB values -lower values- then when actually represented in a DCI-P3 basis). If the metadata signals an original gamut of DCI-P3, the apparatus can elect to use as matrix X the conversion matrix from smaller to larger gamut being the 709-to-P3 matrix, instead of the 709-to-2020 matrix M one would use when checking the data regarding the coding container of the pixel colors.

Since a matrix maps between a larger and a smaller gamut, the third gamut associated with the matrix X is the larger gamut of those two, i.e. e.g. the DCI-P3 gamut (not the smaller Rec. 709 gamut or there would be no need for gamut mapping).

It is preferable to perform the processing in linear RGB components. The inventor realized that the normal gamut mapping, which is normally a 1 step mapping, could be turned into an iterative system as claimed, and that this could solve the accuracy issues.

One can make the gamut mapping apparatus (501), e.g. for a backwards-compatible HDR coder, as above but wherein the second 3x3 matrix M is specifically selected to be the inverse of the first 3x3 matrix (N).

A further insight of the inventor was that one can make the apparatus so that it comprises a multiplier (702) arranged to multiply each one of the three output color components (Rlin_o, Glin_o, Glin_o) by a first scaling constant (LSC1), yielding scaled color components (Rlin_sc, Glin_sc, Blin_sc). Oftentimes gamut mapping is preoccupied with the negative color components resulting from the mapping to narrower gamut as explained with aid of Fig. 5, but this additional unit would provide an all-round better gamut mapper, taking also care about the brightness direction of the gamut (oftentimes designers of gamut mappers don't want to take that additional complexity into account). A unit is typically a part of an integrated circuit, such as in a color processor, etc.

In some embodiments of such a more capable apparatus the scaling constant is equal to a reciprocal value of one of the coefficients of the first 3x3 matrix (N), e.g. the N(1,1) coefficient, or in other embodiments whichever of the 9 components is the largest.

In other embodiments it may be a coefficient of a narrower fitting matrix to the actual content present in the image, e.g. the narrowest fitting X matrix (e.g. scaling constant 1/X(1,1)).

The apparatus may comprise a tone mapper (710) arranged to map the scaled color components to obtain final color components (R_fi, G_fi, B_fi) for a secondary luminance dynamic range which is different than a primary luminance dynamic range which is associated with the input color components (Rlin_i, Glin_i, Blin_i). E.g. as mentioned, such output dynamic range may be a smaller dynamic range, such as the SDR dynamic range. It is not necessary that the tone mapping happens on RGB color components, and certainly not linear ones, e.g. it may happen (after internal color representation conversion) on YCbCr representation, e.g. in the Philips psychovisually uniformized domain, or other color representation.

The inventor then realized a third improvement direction may be beneficial, namely an apparatus comprising a white offset determination unit (810) arranged to determine a white offset (Woff), which white offset instructs to map a value of lowered luminance of an achromatic color to maximum white, wherein the white offset value is calculated from one of the coefficients of the first matrix (N).

The scaling brings high (above maximum) values of chromatic components within gamut, but if every possible color in an image is similar scaled to lower values, the white of an image will also become lower (be too low). There may already be situations where the white is not fully covering the range of possible luminances, e.g. a 5000 nit maximum image defined on a 10,000 nit maximum PQ range of luminances. But in such a situation (assume a system without primary basis change, i.e. without gamut mapping) the tone mapper will typically indicate that the 5000 nit should be mapped to the maximum of the smaller luminance range, e.g. to 100 nit (otherwise some luminances of the already quite small smaller luminance range will be wasted, as pixel luminances would get mapped there which do not even exist in the input e.g. master HDR image, e.g. a 7000 nit pixel). This can be achieved by co-communicating in metadata of the image a luminance mapping function which maps 5000 nit to 100 nit (and is e.g. not mathematically defined for larger values), or by other equivalent means (e.g. communicating values that can appropriately scale a luminance mapping function defined on input and output range having a maximum of 1.0, so that those ranges are scaled by a value 100 and 5000 respectively).

Now we have due to the new gamut mapping in the HDR image or video encoding apparatus, that the white has been additionally lowered, e.g. from its normal value 5000 to 1.66x less being only 3000 nit. It is not so simple to simply add another mapping function, since then one of (e.g. legacy already deployed in the market) devices without gamut mapping, and the new devices with gamut mapping according to the principles taught herein, may function incorrectly. The inventor realized that there are some coding systems (e.g. SL_HDR-1) that communicate to the receiving tone mapper a so-called white offset, which can instruct e.g. to a down-grader which input luminance (or corresponding luma) to map to the maximum of the e.g. SDR range (e.g. nothing exists above 90% of luminance defined on a 10,000 nit maximum range, or nothing exists above 80% of 1023 bit PQ lumas), then by indicating this the down-grading (e.g. receiving side) tone mapper or luminance mapper can take this into account. This may be a pre-processing block, or also even after a luminance mapping function has been performed which yields a lowered output, on e.g. the SDR range. Similarly in the other direction, an up-grader may take this value into account when mapping the SDR white (i.e. the 100 nit luminance pixels) to some output pixel luminance, e.g. the 5000 nit. The novel encoder can now encode some "fake" white offset, so that the non-gamut mapping receivers, which get a too low brightness image, which issue will not be corrected by their inverse gamut mapping unit, will do according to the indicated white offset (Woff) do an extra brightness boost, so the get reconstructed 5000 nit HDR instead of e.g. dimmer 3000 nit maximum reconstructed HDR. The decoders with gamut mapping units would come to an incorrect output image when following this adjusted Woff, but they can be re-invented by having a white offset adjustment unit that will set the received incorrect offset Woff to the correct offset (Wo2) that will yield the correct image (correct brightness, correct saturation) after doing all the inverse processing of the encoder for decoding to the accurate reconstruction of the master HDR or other coded image, i.e. by the image as received undergoing the inverse scaling, the inverse gamut mapping, and finally color space conversion to e.g. Rec. 2020 or DCI_P3 as taught herein.

The new (forward) gamut mapping can be realized as a method of mapping three input color components (Rlin_i, Glin_i, Blin_i) defined in an input color primary basis of first saturation (1R2, 1G2) to output color components (Rlin_o, Glin_o, Glin_o) in an output color gamut defined by an output color primary basis of second saturation (1R1, 1G1), wherein at least one of the primary colors (1R1) of the output color primary basis has lower color saturation than a corresponding primary color (1R2) of the input color primary basis, the method comprising:
- a color space converting to calculate intermediate color components (R2lin_i, G2lin_i, B2lin_i) defined in the less saturated output primary basis by multiplying a first 3x3 matrix (N) by the input color components, wherein coefficients of the matrix (N) are determined by the input color primary basis and the output color primary basis, wherein the three input color components are color components of an input image; and
- mapping the intermediate color components (R2lin_i, G2lin_i, B2lin_i) to the output color components (Rlin_o, Glin_o, Glin_o), wherein the output color components have values between zero and a predefined maximum, by performing:
- establishing a differential gain value diff_gain;
- obtaining weight values for scaling a contribution of an amplitude of a color component which are defined by: $kRG = \left(M\left(1, 2\right)/M\left(1, 1\right)\right) * \left(1/diff_gain\right) / \left(1.0-\left(1/diff_gain\right)\right) ;$ $kRB = \left(M\left(1, 3\right)/M\left(1, 1\right)\right) * \left(1/diff_gain\right) / \left(1.0-\left(1/diff_gain\right)\right) ;$ $kGR = \left(M\left(2, 1\right)/M\left(2, 2\right)\right) * \left(1/diff_gain\right) / \left(1.0-\left(1/diff_gain\right)\right) ;$ $kGB = \left(M\left(2, 3\right)/M\left(2, 2\right)\right) * \left(1/diff_gain\right) / \left(1.0-\left(1/diff_gain\right)\right) ;$ $kBR = \left(M\left(3, 1\right)/M\left(3, 3\right)\right) * \left(1/diff_gain\right) / \left(1.0-\left(1/diff_gain\right)\right) ;$ $kBG = \left(M\left(3, 2\right)/M\left(3, 3\right)\right) * \left(1/diff_gain\right) / \left(1.0-\left(1/diff_gain\right)\right) ,$ wherein the above M(x,y) values are a constant value at position (x,y) of a second 3x3 matrix M which is the inverse of a third 3x3 matrix (X), which is selected from a set of pre-established color space conversion matrices, as a matrix taken from the set of matrices satisfying a criterion that substantially all colors of an input image (IM_dec_in) lie inside a third gamut defined by the third matrix and the third matrix converts between that third gamut and the output color gamut (e.g. matrix which has lowest saturated primaries, i.e. most snugly fits the colors in the image or video, which may be e.g. a DCI-P3-to-Rec.709 matrix if actually a DCI-P3 graded video is stored in the original container, which better uses the region in which out of gamut colors are used, or it can decide, e.g. in a pre-engineered manner, to use the Rec. 2020 primaries and related matrix from the incoming 2020 container of the image, e.g. signalled in image describing metadata);
- setting initial values for three iterated color components (Rt, Gt, Bt) based on corresponding input color components, to create positive values: $Rt = max \left(0, R2lin_i\right) ;$ $Gt = max \left(0, G2lin_i\right) ;$ $Bt = max \left(0, B2lin_i\right) ;$
- performing at least two iterations of the following calculations:
   - determining threshold values for the three color components based on two of the iterated color components which are not the color component that the threshold is for: $Rthr = kRG * Gt + kRB * Bt ;$ $Gthr = kGR * Rt + kGB * Bt ;$ $Bthr = kBR * Rt + kBG * Gt ;$ ; and
   - performing the following three mapping functions on the input color components: $Rout = Rthr + \left(R2lin_i-Rthr\right) / diff_gain if R 2 lin_i < Rthr$ $Rout = R 2 lin_i if R 2 lin_i > = Rthr ;$ $Gout = Gthr + \left(G2lin_i-Gthr\right) / diff_gain if G 2 lin_i < Gthr$ $Gout = G 2 lin_i if G 2 lin_i > = Gthr ;$ $Bout = Bthr + \left(B2lin_i-Bthr\right) / diff_gain if B 2 lin_i < Bthr$ $Bout = B 2 lin_i if B 2 lin_i > = Bthr ;$ and
   - setting the three iterated color components for the next iteration equal to the output values of the three mapping functions:
      Rt = Rout;
      Gt = Gout;
      Bt = Bout; and
      after finishing the last iteration setting the three output color components (Rlin_o, Glin_o, Glin_o) equal to the corresponding one of the three iterated color components (Rt, Gt, Bt).

The method may comprise calculating scaled color components (Rlin_sc, Glin_sc, Blin_sc) by multiplying each one of the three output color components (Rlin_o, Glin_o, Glin_o) by a first scaling constant (LSC1) which is equal to a reciprocal value of one of the coefficients of the first 3x3 matrix (N).

The method may comprise determining a white offset (Woff), which white offset instructs to map a value of lowered luminance of an achromatic color to maximum white, wherein the white offset value is calculated from one of the coefficients of the first matrix (N).

A corresponding inverse gamut mapping apparatus (701) which is the mirror of the scaling forward gamut mapping apparatus taught above to redetermine the higher saturation colors is arranged to map three input color components defined in an input color primary basis of first saturation to output color components in an output color gamut defined by an output color primary basis of second saturation (1R1, 1G1), wherein at least one of the primary colors (1R1) of the output color primary basis has higher color saturation than a corresponding primary color (1R2) of the input color primary basis, wherein the apparatus comprises:
- a multiplication unit (703) arranged to perform a multiplicative scaling of the three input color components by multiplying them by a second scaling constant (LSC2), which is indicated by metadata associated with an input image (IM_dec_in) wherein the three input color components are coded, yielding three corresponding scaled color components;
- a color mapping unit (603) arranged to obtain a value of a differential gain (diff_gain) and a red threshold value (Rthr), a green threshold value (Gthr) and map a blue threshold value (Bthr), and map the scaled color components to intermediate color components in a wider gamut (R3lin_i, G3lin_i, B3lin_i), by performing the equations: $R 3 lin_i = Rthr + \left(Rlin_o-Rthr\right) * diff_gain if Rlin_o < Rthr$ $R 3 lin_i = Rlin_o if Rlin_o > = Rthr ;$ $G 3 lin_i = Gthr + \left(Glin_o-Gthr\right) * diff_gain if Glin_o < Gthr$ $G 3 lin_i = Glin_o if Glin_o > = Gthr ;$ $B 3 lin_i = Bthr + \left(Blin_o-Bthr\right) * diff_gain if Blin_o < Bthr$ $B 3 lin_i = Blin_o if Blin_o > = Bthr ;$ and
- a color space converter (602) arranged to calculate final wider gamut output color components (Rlin_oo, Glin_oo, Blin_oo) by multiplying a second 3x3 matrix (M) by the intermediate color components (R3lin_i, G3lin_i, B3lin_i), wherein coefficients of the matrix (M) is a color matrix for converting a color represented as a color coordinate triplet in the input color primary basis to a corresponding color coordinate triplet in the output color primary basis.

The inverse gamut mapping apparatus (701) corresponding to the white offset technique of the forward gamut mapping (typically when included in a HDR image or video encoder) comprises a white offset adjustment unit (820) arranged to determine an adjusted white offset (Wo2) based on a white offset (Woff) as received and one of the coefficients of a first matrix (N), which is a matrix for color space conversion from the output color primary basis to the input color primary basis, which white offset instructs a comprised tone mapper (720) to map a maximum luminance of a range of input luminances to a value of lowered luminance of an achromatic color on a range of high dynamic range output luminances wherein the final wider gamut output color components reside.

These inverse mappers (typically implemented in a HDR image or video receiver) may also be implemented as a method of inverse gamut mapping arranged to map three input color components defined in an input color primary basis of first saturation to output color components in an output color gamut defined by an output color primary basis of second saturation (1R1, 1G1), wherein at least one of the primary colors (1R1) of the output color primary basis has higher color saturation than a corresponding primary color (1R2) of the input color primary basis, wherein the method comprises:
- performing a multiplicative scaling of the three input color components by multiplying them by a second scaling constant (LSC2), which is indicated by metadata associated with an input image (IM_dec_in) wherein the three input color components are coded, yielding three corresponding scaled color components;
- obtaining a value of a differential gain (diff_gain) and a red threshold value (Rthr), a green threshold value (Gthr) and map a blue threshold value (Bthr),
- mapping the scaled color components to intermediate color components in a wider gamut (R3lin_i, G3lin_i, B3lin_i), by performing the equations: $R 3 lin_i = Rthr + \left(Rlin_o-Rthr\right) * diff_gain if Rlin_o < Rthr$ $R 3 lin_i = Rlin_o if Rlin_o > = Rthr ;$ $G 3 lin_i = Gthr + \left(Glin_o-Gthr\right) * diff_gain if Glin_o < Gthr$ $G 3 lin_i = Glin_o if Glin_o > = Gthr ;$ $B 3 lin_i = Bthr + \left(Blin_o-Bthr\right) * diff_gain if Blin_o < Bthr$ $B 3 lin_i = Blin_o if Blin_o > = Bthr ;$ and
- a color space converter (602) arranged to calculate final wider gamut output color components (Rlin_oo, Glin_oo, Blin_oo) by multiplying a second 3x3 matrix (M) by the intermediate color components (R3lin_i, G3lin_i, B3lin_i), wherein coefficients of the matrix (M) is a color matrix for converting a color represented as a color coordinate triplet in the input color primary basis to a corresponding color coordinate triplet in the output color primary basis.

Or as a method of method of inverse gamut mapping comprising white offset adjustment arranged to determine an adjusted white offset (Wo2) based on a white offset (Woff) as received and one of the coefficients of a first matrix (N), which is a matrix for color space conversion from the output color primary basis to the input color primary basis, which white offset instructs a tone mapping to map a maximum luminance of a range of input luminances to a value of lowered luminance of an achromatic color on a range of high dynamic range output luminances wherein the final wider gamut output color components reside.

### BRIEF DESCRIPTION OF THE DRAWINGS

These and other aspects of the method and apparatus according to the invention will be apparent from and elucidated with reference to the implementations and embodiments described hereinafter (which should be seen as embodiments for exemplification), and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, are hidden in the interior of an object, or for intangible things such as e.g. selections of objects/regions.

In the drawings:
Fig. 1 schematically shows examples of various luminance dynamic range changes (Fig. 1C) of image objects in a cave scene (Fig. 1A), which get objects get different (average) luminances when represented in different maximum luminance versions of the same image (a.k.a. different gradings); such luminance mappings can be implemented by using luminance mapping functions (Fig. 1D) to be applied to any pixel's luminance, depending only on the input luminance irrespective of the position of the pixel in the image, and such functions can also be calculated in a luma domain coding the luminances; also shown in Fig. 1B is how one can normalize the input (3D) color gamut (hue, saturation, brightness representation) and the output gamut and then show the luminance mappings as vertical shifts of the input colors in the gamut; in Fig. 1 C the spread of the typical (e.g. average) luminances of various images objects are shown along the various luminance dynamic ranges associated with various representations of the (one or more) image(s) of this cave scene.
Fig. 2 schematically shows various possible source to sink (user) video or image communication systems which may implement the present innovative embodiments; the below embodiments are not limited to these applications spanning the totality of HDR image usage, as it may also be applied e.g. in professional camera-based monitoring systems, or other display manners, etc.
Fig. 3 shows an elucidation example of how an HDR decoding apparatus can ingest an encoded HDR image (or visual asset) coding, according to any of many different coding variants, and ultimately output a HDR image, potentially of different (selectable) characteristics as desired, e.g. for direct display on a connected display having particular HDR capabilities such as an end-user display maximum displayable pixel luminance;
Fig. 4 schematically shows a system and apparatus for creating, and specifically encoding a HDR image coding, e.g. for communication to receiving apparatuses over e.g. a broadcast, unicast (e.g. a requested video on demand delivered over 5G to a mobile phone), or internet-based communication system;
Fig. 5 schematically illustrates issues of color basis change when representing a set of input colors, originally (validly, i.e. having all components between 0 and max, e.g. 1) specified in a more saturated so-called wider color basis, in a narrower, less saturated color basis;
Fig. 6 shows a basic embodiment of the present innovation's gamut mapping apparatus and inverse gamut mapping apparatus;
Fig. 7 shows more advanced embodiments of the present innovation's gamut mapping apparatus and inverse gamut mapping apparatus (possibly incorporated in respectively a HDR image encoder and decoder);
Fig. 8 shows even more advanced embodiments of the present innovation's gamut mapping apparatus and inverse gamut mapping apparatus; and
Fig. 9 shows the results of gamut mapping a wide set of colors spanning only the DCI_P3 space and no more saturated colors, after gamut mapping according to a matrix 2020-to-709 on the left versus a matrix P3-to-709 on the right in a CIE1976 UCS a.k.a. uv color plane.

### DETAILED DESCRIPTION OF THE EMBODIMENTS

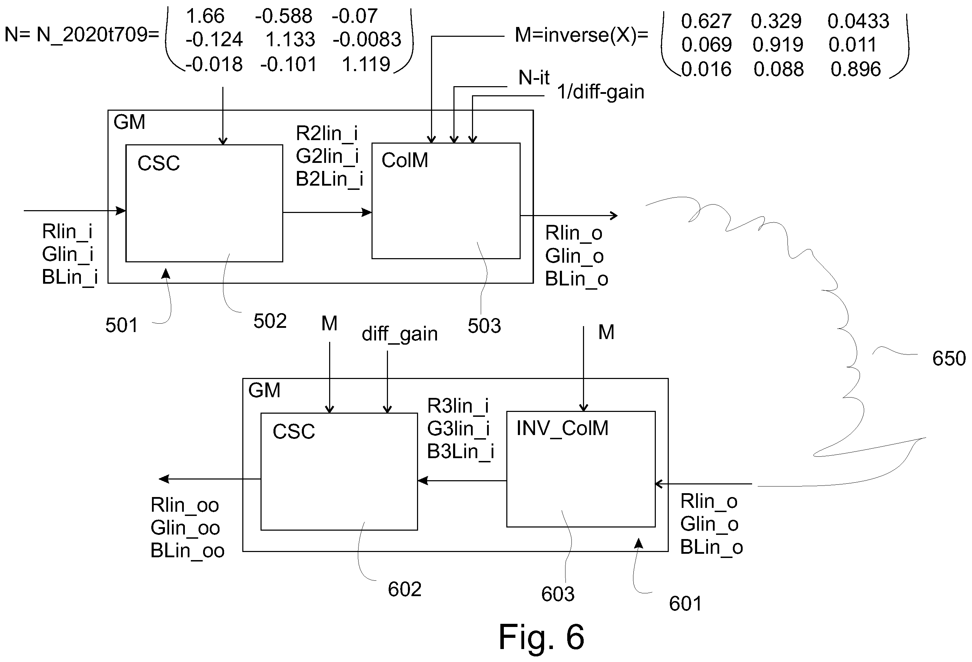

**Fig. 6** shows an example of a chained gamut mapping (by a gamut mapping apparatus (501) which may reside e.g. in a HDR encoder for say a HDR television broadcast) and inverse gamut mapping (by an inverse gamut mapping apparatus 601, which may reside e.g. in a television display or mobile phone, etc.). The gamut mapping may be used in an SDR only scenario, i.e. wherein the input colors are in e.g. a 100 nit maximum Rec. 2020 primaries gamut, and valid color components (i.e. having values between 0 and Max., e.g. 100 or 1) have to be calculated for a narrower e.g. Rec. 709 gamut also having a maximum luminance of 100 nit, or even a maximum brightness being a relative value not formulated in nits. But since this gamut mapping is particularly useful for HDR image handling, whether processing, or coding, even coding by SDR communication image, we will further elucidate details under the assumption of working in some HDR system (e.g. PQ -defined, or e.g. SL-HDR).

The matrix N exemplified is the matrix N_2020t709 which maps full gamut of Rec. 2020 primaries to 709 gamut colors, and it has e.g. as first coefficient N(1,1) a.k.a. N_redred (contribution of the red magnitude of an input color to the red component of the coding of the color in the output basis) equal to 1.66, etc.

The inverse matrix M is also shown. This of course is the matrix to convert a coding in the 709 basis to the 2020-based representation, ergo, it is the matrix to be used by second color space converter 602 in the inverse gamut mapping (or color stretching). The inverse color mapping algorithm of inverse color mapping unit 603 will do the opposite function mapping of color mapping unit 503 (i.e. it maps back the zero value of the Rlin_o etc. to a negative value as was in the R2lin_i representation), but, of course it keeps red the color component values above the threshold R_thr identical to the value at input of the function, because the forward gamut mapping kept those component values unchanged also.

This results (based on as input the output components of the forward gamut mapping, i.e. Rlin_o etc., which are connected to the inverse gamut mapping via some data connection mechanism 650 which depends on the particular application and its implementation, e.g. a bus between computers, the internet, etc.) in intermediate color components (R3lin_i, G3lin_i, B3lin_i), which can finally be re-coded in a Rec. 2020 basis representation by second color space converter 602, yielding a highly accurate (near perfect) reconstruction (Rlin_oo, Glin_oo, Blin_oo) of the original Rec. 2020 input colors, i.e. Rlin_i etc. The arrows represent various electable control parameters going into the processing units, e.g. color mapping unit 503 receives the reciprocal value of the elected differential gain (it can of course in some implementations also receive diff_gain itself, and then internally do the division to obtain its reciprocal value). In fact, systems which need not be configurable, because always the same basis is used, may have the various electable parameters baked into the unit, e.g. into the equations of the algorithm or stored in some fixed onboard memory etc.

The inventor found that a value of 4 for the diff_gain is in practice a well-working value. Somewhat lower or higher values could be used, but higher differential gain would leave a smaller region (between the equal color component i.e. unchanged colors and the Rec. 709 boundary) for squeezing the originally out-of-rec709-gamut colors, and therefore in the reconstruction (inverse gamut mapping) yield more noise and reconstruction errors. Lower values of differential gain diff_gain would change potentially too many of the originally in-gamut colors.

The number of iterations (N_it) can be chosen based on needs such as number of bit of the color representation (e.g. 10 bit for consumer applications versus e.g. 12 for professional use, e.g. coding and storage for later use)

Since preferably the color components are linear RGB components (which makes things more challenging), the inventor found that in such a scenario 5 iterations would yield perfect reconstruction (encoding/decoding, e.g. merely forward and inverse gamut mapping) for 28 bit linear light color codings.

But in some situations 2 iterations would already suffice (to avoid doubt, 1 iteration is when the equations, e.g. Rthr = kRG * Gt + kRB * Bt, would be calculated once, and two iterations when they are done a second time, but now with an updated value of Rt etc.). The number of required or useful iterations can be e.g. tested in the lab by checking the colors that produce the largest errors. Or for some applications/apparatuses one can just use an always certainly large enough number of iterations, but for others, e.g. mobile phones, one should mind that needless or relatively less important iterations for getting only the last bits correct (which may be visually unimportant) may cost an excessive amount of processing time or battery power.

Instead of inputting the matrices as shown, and therefrom calculating the k coefficients, practical embodiments of the present innovation may similarly input the coefficients themselves, as one has only one or a few fixed matrices.

As an example of matrix N (for conversion from the largest, container basis representation to the smallest Rec. 709 basis representation of the -originally still highly saturated-colors), we have taken the 2020-to-709 matrix, since those are two popular format for HDR image specification. It has as highest coefficient the N(1,1) coefficient, or the influence of red color amplitude in the larger basis on the red amplitude needed to define the additive color in the narrower basis. Ergo, the worst color overflow that could happen would be on a saturated 2020 primary red color of full amplitude, which would map 66% above gamut. This 1/1.66 component would be used for the down-scaling of all RGB values by multiplier 702. The inverse matrix is in the numerical example taken to be the 709-to-2020 matrix. As we can see, other configuration input (but one could also build an embodiment of the apparatus that e.g. always uses a fixed diff_gain equal to 4, ergo need not have it as a configurable input) may typically be the required number of iterations N_it of the mapping, and a diff_gain, already as 1/diff_gain in the forward gamut mapping, i.e. to narrower output gamut.

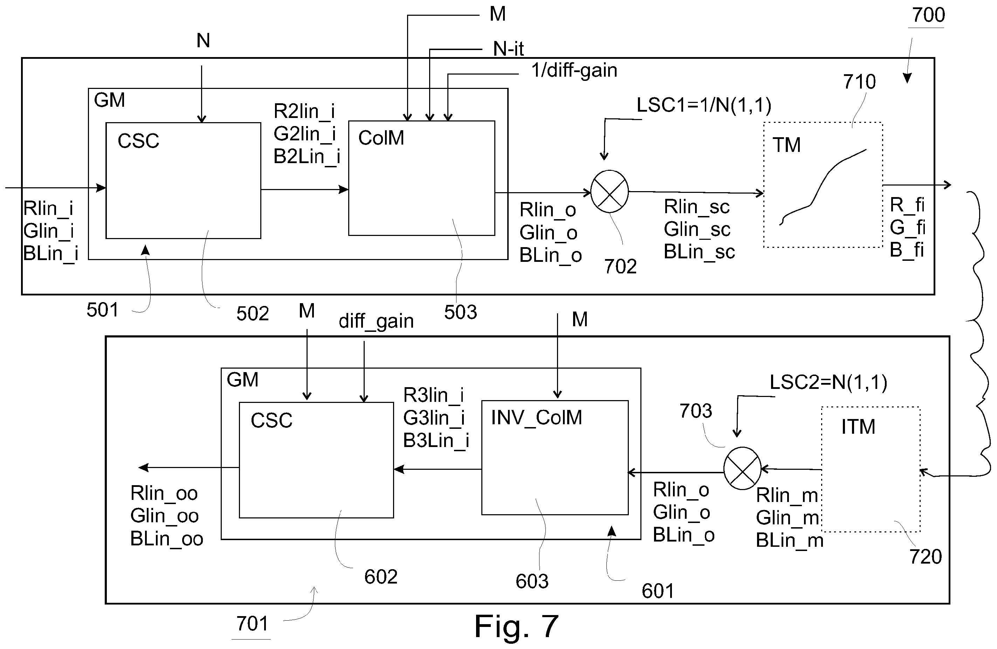

In **Fig. 7** we show an embodiment of the gamut mapping apparatus which also has a multiplier 702 for down-scaling all pixel color RGB values by a first scaling constant LSC1, which is dependent on a largest coefficient of the elected color space conversion matrix N, or on the largest coefficient of the (larger to smaller gamut conversion) matrix X of potentially a less saturated basis (e.g. DCI-P3), since less saturated colors would project less above upper gamut boundary due to the color space conversion. In principle the gamut mapping embodiments may be useful when staying in the same luminance dynamic range, output as well as input, i.e. for pure gamut mapping. But these gamut mappings may be especially useful for dynamic range processing apparatuses. So the gamut mapper may be included in a dynamic range processor, especially a HDR image encoder 700, which encodes an input (typically master) HDR image as a proxy HDR image, e.g. for communication over backwards compatible communication systems (e.g. R_fi, G_fi, B_fi, or their derived YCbCr values, are standard Rec. 709 color basis SDR luminance range colors, be it that they represent via the added metadata functions for reconstruction some original HDR image). Thereto it may comprise a tone mapper 710.

Inverse gamut mapping apparatus 701 may e.g. be a HDR image decoder, i.e. it may also contain a second tone mapper 720, which will undo the tone mapping of tone mapper 710, i.e. up-map the luminances to a HDR range (when reconstructing the original, the e.g. 5000 nit maximum range of the master HDR image). In case there is tone mapping, the input (typically linear) RGB values to the inverse gamut mapper (i.e. the R_fi etc. as created by the forward mapper) will be converted to mapped intermediate RGB values (Rlin_m, Glin_m, Blin_m). The scaled version of those will be, in a substantially invertible system as we herein propose, be equal to Rlin_o etc. again. In fact, the final output of the inverse gamut mapper (Rlin_oo etc.) should also except for a few very minor errors (in case one needs to save on iterations) be identical to the original input color components (i.e. Rlin_i etc.), and one can design the apparatus so that any error of a few bits will (likely) not be (highly) visible, not even under typical further processing such as brightness or contrast processing (or one could accept some minor errors in a strongly post-processed displayed image, but if one wants to avoid that one could demand no larger error than e.g. 1LSB in 12 bit or the like).

Some of the processing units may be connected in different order, in other words steps of the processing may sometimes be done in inverse order. E.g., since the color space converter and gamut mapper work in a linear manner on linear components, the position of the multiplier 702 for scaling (or multiplier 703) can be changed to e.g. before the color space conversion, etc. Also, in principle the tone or luminance mapping may happen before the gamut mapping. But e.g. for backwards compatibility it may be useful to have the tone mapping after the gamut mapping. A master HDR video in Rec. 2020 may then be converted to Rec. 709. Legacy systems which do have HDR capability - e.g. they can reconstruct a HDR image from the received SDR 709 image- can then handle that data coming out of tone mapper (i.e. R_fi etc.), but they cannot nor need to do a gamut increasing e.g. inverse gamut mapping operation, as they simply show HDR with reduced saturation colors.

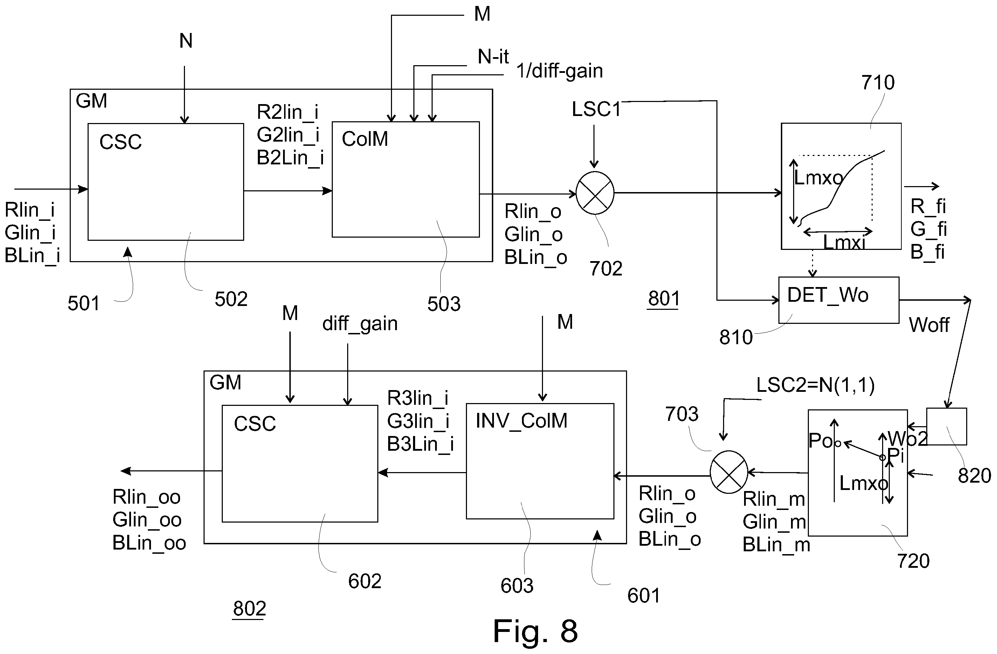

Fig. 8 elucidates the concept of providing an embodiment of the forward and inverse gamut apparatus for a system capable of catering for legacy decoders, e.g. a standard SL_HDR-1 decoder which does not have a capability of or connection to inverse gamut mapping.

This decoder has a black/white level adaptation unit after the function-based luma mapping. Perceptually uniform lumas are generated according to the Philips OETF (see above, eq. 1). SDR lumas (after becoming PU -domain lumas) typically have highest pixel lumas of 100%, and the function typically maps those to 100%. The black/white level adaptation can set that 100% up-mapped value to some PU luma less than 100%, which corresponds to a certain luminance. To which output luma should be mapped is determined by the white offset (Woff). Ignoring details, which may vary in equivalent embodiments, the idea is that the encoder communicates the Woff level (communicated in Woff metadata) is e.g. 90%. That is what they brightest white pixel of say a TL lamp should ideally be displayed at. Now due to the gamut mapping the level of that white becomes e.g. 1.66x lower (which corresponds to some other percentage in the luma domain that can be read from the fixed OETF curve). For DCI_P3 contained colors one can calculate another prefixed overflow and the needed down-scaling to bring all colors that can possibly occur in the video images into the Rec. 709 gamut i.e. onto valid Rec. 709 SDR colors. If one does nothing, the legacy devices could reconstruct to the lower value, but that would yield images that are imperfectly dim. So the encoder can instruct, via an adjusted Woff, to boost by an extra 1.66, and the legacy receiver will simply follow that according to its standardized behavior (otherwise the standard decoder would process the maximum color as some bright grey color rather than white). Some saturated colors may overflow and clip, but for a (non-inverted) SDR output that is expected and acceptable, but at least the majority of the corrected colors is appropriately bright. A white offset determination unit 810 is added to this encoder embodiment, to calculate the Woff appropriate for legacy decoders.

However, if the new decoder with inverse gamut mapping functionality would do that, it would yield images that are too bright, because it first boosts excessively due to the adjusted Woff, and then even more due to the brightness effect of the inverse gamut mapping (the multiplier 703). So it can be re-designed to include a white offset adjustment unit 820, arranged to re-correct the received white offset Woff, i.e. to remove the additional boost intended for legacy non-gamut mapping decoders, to obtain the correct (original, HDR luminance-range dependent) adjusted white offset Wo2, so that the new decoders will also map the SDR white to the correct reconstructed maximum white luminance, e.g. 5000 nit. As to communicated metadata between transmitter/coder and receiver/decoder/inverse gamut mapper, either the correct scaling factor can be transmitted, i.e. second scaling constant LSC2, or information sufficient to derive it, such as an indication of the applicable color space conversion matrix, or an indication of the original color space/basis of the input colors (e.g. Rec. 2020) etc. In the tone mappers, although they can in various embodiments include various sub-processing units, we have schematically shown the white offset principles. Normally (as illustrated inside 720) the white offset would map the maximum of the SDR range to some point Po on the output range of HDR luminances. Now however we have a lowered maximum, i.e. a lowered maximum white. That is illustrated in 710. A reduced input Lmxi into some mapping would yield a reduced output Lmxo (which may be quantified on a range of luminances, or lumas according to any OETF). Now that shifted input point Pi needs to end up onto the correct HDR output luminance. In the legacy decoder that will happen due to a changed white offset Woff calculated and communicated by the encoder as taught in this invention (to bring the worst case color overflow validly in gamut), and in the new decoder that will happen due to an adjusted white offset (Wo2) and the gamut mapping calculations.

E.g. encoders working according to SL_HDR-1 principles may use as white offset: Woff=Woffset_natural - [1.0-inverse_EOTFST2094-20 (Lmax,LHDR)], in which Lmax is the maximum (potentially) occurring luminance in the scaled video (e.g. 1.0/M(1,1)), and LHDR is the target display maximum luminance of the input HDR image, e.g. 5000 nit, which is typically co-communicated as metadata of the video, and Woffset_natural is the white offset that would be applicable if neither encoder nor decoder had chromatic gamut mapping capabilities.

The novel encoders have already utility by themselves, because they can improve things in a system employing legacy decoders. This would create less banding for the saturated colors.

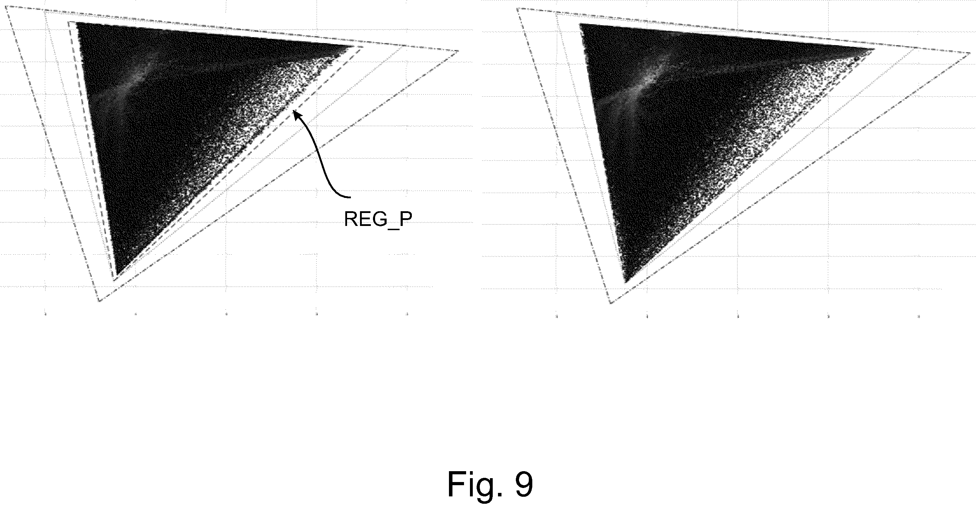

Fig. 9 illustrates what a typical embodiment of the present innovation that has no prefixed matrixing data in its iterative algorithm but has a capability to choose between matrices (or corresponding equivalent parameters, such as the k parameters) will typically do. On the left we see if the gamut mapping uses the M or N matrix, then a suboptimal gamut mapping will occur, leaving a region REG_P near the lines of purples of the Rec. 709 unused. Using a narrower fit matrix, such as the third matrix X mapping between DCI_P3 and Rec. 709 will as shown in the right plot better use the available Rec. 709 colors, and therefore yield a better gamut mapping in non-invertible uses (more beautiful saturated colors) and in invertible uses. Also for the RGB scaling the X matrix should preferably be used in such a non-full-2020-saturated input image colors situation. The receiver will typically learn how to configure its gamut mapping parameters from metadata, e.g. the incoming image or video signal may instruct it to use a P3-to-709 matrix and related mapping parameters, either directly (e.g. as a numerical code), or indirectly with equivalent metadata (e.g. regarding the properties of the input image) that will make the receiver understand it should use some specific version of X matrix.

The algorithmic components disclosed in this text may (entirely, or in part) be realized in practice as hardware (e.g. parts of an application specific integrated circuit) or as software running on a special digital signal processor, or a generic processor, etc. At least some of the elements of the various embodiments may be running on a fixed or configurable CPU, GPU, Digital Signal Processor, FPGA, Neural Processing Unit, Application Specific Integrated Circuit, microcontroller, SoC, etc. E.g. complex operations which determine an optimal shape of a mapping function may be performed in firmware, whereas the pixel processing pipeline, which does elementary operations on each and every pixel, e.g. mapping a luminance of that pixel to a resultant luminance for output, may be done in a hardware circuit. Some of the processing may happen on disjunct systems, e.g. as a cloud service. The images may be temporarily or for long term stored in various memories, in the vicinity of the processor(s) or remotely accessible e.g. over the internet. Other memories may contain one or more instructions for configurating or re-configurating parts of the computations or the processing elements of a processing chain.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc. Some apparatuses may be connected to displays or contain displays.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk, data present in a memory, data travelling via a network connection -wired or wireless. Apart from program code, characteristic data required for the program, such as e.g. control data, may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software. Some parts of the apparatuses may be specifically adapted to receive, parse and/or understand innovative signals.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other variants, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. In several situations the word "portion" of a set of elements is not intended to exclude that portion may also cover the totality of the elements, because that may function equally in a same manner. The word "a" or "an" preceding an element does not exclude the presence of a plurality of such elements, nor the presence of other elements. "And/or" means that both options may be present together, or one of them may be present alone. The word "e.g." is typically used to indicate that we mean that something else is also belonging to the possibilities, e.g. a similar element, example, or teaching. "i.a." means inter alia, or among others. An element between ellipses "()" will normally be used to indicate that something is optional, i.e. at the same time saying the further aspect is also possible as a variant of a more general concept behind the ellipses, rather than necessary, e.g. (local) luminance boosting is intended to say, (primarily, as main level teaching) "luminance boosting" in general, which may be for all pixels the same, but may also be different, i.e. of the "local luminance boosting" variant, e.g. only applied to some locality of the image.

## Claims

1. An apparatus (501) arranged to map three input color components (Rlin_i, Glin_i, Blin_i) defined in an input color primary basis of first saturation (1R2, 1G2) to output color components (Rlin_o, Glin_o, Glin_o) in an output color gamut defined by an output color primary basis of second saturation (1R1, 1G1), wherein at least one of the primary colors (1R1) of the output color primary basis has lower color saturation than a corresponding primary color (1R2) of the input color primary basis, wherein the apparatus comprises:
- a color space converter (502) arranged to calculate intermediate color components (R2lin_i, G2lin_i, B2lin_i) by multiplying a first 3x3 matrix (N) by the input color components, wherein coefficients of the matrix (N) are determined by the input color primary basis and the output color primary basis, wherein the three input color components are color components of an input image (IM_enc_in); and
- a color mapping unit (503) arranged to map the intermediate color components (R2lin_i, G2lin_i, B2lin_i) to the output color components (Rlin_o, Glin_o, Glin_o), wherein the output color components have values between zero and a predefined maximum, wherein the color mapping unit performs:
- establishing a differential gain value diff_gain;
- obtaining weight values for scaling a contribution of an amplitude of a color component which are defined by: $kRG = \left(M\left(1, 2\right)/M\left(1, 1\right)\right) * \left(1/diff_gain\right) / \left(1.0-\left(1/diff_gain\right)\right) ;$ $kRB = \left(M\left(1, 3\right)/M\left(1, 1\right)\right) * \left(1/diff_gain\right) / \left(1.0-\left(1/diff_gain\right)\right) ;$ $kGR = \left(M\left(2, 1\right)/M\left(2, 2\right)\right) * \left(1/diff_gain\right) / \left(1.0-\left(1/diff_gain\right)\right) ;$ $kGB = \left(M\left(2, 3\right)/M\left(2, 2\right)\right) * \left(1/diff_gain\right) / \left(1.0-\left(1/diff_gain\right)\right) ;$ $kBR = \left(M\left(3, 1\right)/M\left(3, 3\right)\right) * \left(1/diff_gain\right) / \left(1.0-\left(1/diff_gain\right)\right) ;$ $kBG = \left(M\left(3, 2\right)/M\left(3, 3\right)\right) * \left(1/diff_gain\right) / \left(1.0-\left(1/diff_gain\right)\right) ,$ wherein the above M(x,y) values are a constant coefficient value at position (x,y) of a second 3x3 matrix M which is the inverse of a third 3x3 matrix (X), which is selected from a set of pre-established color space conversion matrices, as a matrix which satisfies a criterion that substantially all colors of an input image (IM_enc_in) lie inside a third gamut defined by the third matrix, and the third matrix converts between that third gamut and the output color gamut;
- setting initial values for three iterated color components (Rt, Gt, Bt) based on corresponding input color components, to create positive values: $Rt = max \left(0, R2lin_i\right) ;$ $Gt = max \left(0, G2lin_i\right) ;$ $Bt = max \left(0, B2lin_i\right) ;$
- performing at least two iterations of the following calculations:
- determine threshold values for the three color components based on two of the iterated color components which are not the color component that the threshold is for: $Rthr = kRG * Gt + kRB * Bt ;$ $Gthr = kGR * Rt + kGB * Bt ;$ $Bthr = kBR * Rt + kBG * Gt ;$ and
- performing the following three mapping functions on the input color components: $Rout = Rthr + \left(R2lin_i-Rthr\right) / diff_gain if R 2 lin_i < Rthr$ $Rout = R 2 lin_i if R 2 lin_i > = Rthr ;$ $Gout = Gthr + \left(G2lin_i-Gthr\right) / diff_gain if G 2 lin_i < Gthr$ $Gout = G 2 lin_i if G 2 lin_i > = Ghr ;$ $Bout = Bthr + \left(B2lin_i-Bthr\right) / diff_gain if B 2 lin_i < Bthr$ $Bout = B 2 lin_i if B 2 lin_i > = Bthr ;$ and
- setting the three iterated color components for the next iteration equal to the output values of the three mapping functions:
Rt = Rout;
Gt = Gout;
Bt = Bout; and
after finishing the last iteration setting the three output color components (Rlin_o, Glin_o, Glin_o) equal to the corresponding one of the three iterated color components (Rt, Gt, Bt).

2. The apparatus (501) as claimed in claim 1 wherein the third 3x3 matrix (X) is selected from a set of pre-established color space conversion matrices, as a matrix which has lowest saturated primaries from all matrices fulfilling a criterion that substantially all colors of an input image (IM_enc_in) lie inside a third gamut defined by the third matrix, and the third matrix converts between that third gamut and the output color gamut.

3. The apparatus (501) as claimed in claim 1, wherein the second 3x3 matrix M is selected to be the inverse of the first 3x3 matrix (N).

4. The apparatus as claimed in one of the above claims comprising a multiplier (702) arranged to multiply each one of the three output color components (Rlin_o, Glin_o, Glin_o) by a first scaling constant (LSC1), yielding scaled color components (Rlin_sc, Glin_sc, Blin_sc).

5. The apparatus as claimed in claim 4 wherein the scaling constant is equal to a reciprocal value of one of the coefficients of the first 3x3 matrix (N).

6. The apparatus as claimed in claim 4 wherein the scaling constant is equal to a reciprocal value of one of the coefficients of the third 3x3 matrix (X).

7. The apparatus as claimed in one of the above apparatus claims, comprising a tone mapper (710) arranged to map the scaled color components to obtain final color components (R_fi, G_fi, B_fi) for a secondary luminance dynamic range which is different than a primary luminance dynamic range which is associated with the input color components (Rlin_i, Glin_i, Blin_i).

8. The apparatus as claimed in one of the above apparatus claims, comprising a white offset determination unit (810) arranged to determine a white offset (Woff), which white offset instructs to map a value of lowered luminance of an achromatic color to maximum white, wherein the white offset value is calculated from one of the coefficients of the first matrix (N).

9. A method of mapping three input color components (Rlin_i, Glin_i, Blin_i) defined in an input color primary basis of first saturation (1R2, 1G2) to output color components (Rlin_o, Glin_o,Glin_o) in an output color gamut defined by an output color primary basis of second saturation (1R1, 1G1), wherein at least one of the primary colors (1R1) of the output color primary basis has lower color saturation than a corresponding primary color (1R2) of the input color primary basis, the method comprising:
- a color space converting to calculate intermediate color components (R2lin_i, G2lin_i, B2lin_i) defined in the less saturated output primary basis by multiplying a first 3x3 matrix (N) by the input color components, wherein coefficients of the matrix (N) are determined by the input color primary basis and the output color primary basis, wherein the three input color components are color components of an input image; and
- mapping the intermediate color components (R2lin_i, G2lin_i, B2lin_i) to the output color components (Rlin_o, Glin_o, Glin_o), wherein the output color components have values between zero and a predefined maximum, by performing:
- establishing a differential gain value diff_gain;
- obtaining weight values for scaling a contribution of an amplitude of a color component which are defined by: $kRG = \left(M\left(1, 2\right)/M\left(1, 1\right)\right) * \left(1/diff_gain\right) / \left(1.0-\left(1/diff_gain\right)\right) ;$ $kRB = \left(M\left(1, 3\right)/M\left(1, 1\right)\right) * \left(1/diff_gain\right) / \left(1.0-\left(1/diff_gain\right)\right) ;$ $kGR = \left(M\left(2, 1\right)/M\left(2, 2\right)\right) * \left(1/diff_gain\right) / \left(1.0-\left(1/diff_gain\right)\right) ;$ $kGB = \left(M\left(2, 3\right)/M\left(2, 2\right)\right) * \left(1/diff_gain\right) / \left(1.0-\left(1/diff_gain\right)\right) ;$ $kBR = \left(M\left(3, 1\right)/M\left(3, 3\right)\right) * \left(1/diff_gain\right) / \left(1.0-\left(1/diff_gain\right)\right) ;$ $kBG = \left(M\left(3, 2\right)/M\left(3, 3\right)\right) * \left(1/diff_gain\right) / \left(1.0-\left(1/diff_gain\right)\right) ,$ wherein the above M(x,y) values are a constant value at position (x,y) of a second 3x3 matrix M which is the inverse of a third 3x3 matrix (X), which is selected from a set of pre-established color space conversion matrices, as a matrix which satisfies a criterion that substantially all colors of an input image (IM_dec_in) lie inside a third gamut defined by the third matrix and the third matrix converts between that third gamut and the output color gamut;
- setting initial values for three iterated color components (Rt, Gt, Bt) based on corresponding input color components, to create positive values: $Rt = max \left(0, R2lin_i\right) ;$ $Gt = max \left(0, G2lin_i\right) ;$ $Bt = max \left(0, B2lin_i\right) ;$
- performing at least two iterations of the following calculations:
- determining threshold values for the three color components based on two of the iterated color components which are not the color component that the threshold is for: $Rthr = kRG * Gt + kRB * Bt ;$ $Gthr = kGR * Rt + kGB * Bt ;$ $Bthr = kBR * Rt + kBG * Gt ;$ and
- performing the following three mapping functions on the input color components: $Rout = Rthr + \left(R2lin_i-Rthr\right) / diff_gain if R 2 lin_i < Rthr$ $Rout = R 2 lin_i if R 2 lin_i > = Rthr ;$ $Gout = Gthr + \left(G2lin_i-Gthr\right) / diff_gain if G 2 lin_i < Gthr$ $Gout = G 2 lin_i if G 2 lin_i > = Gthr ;$ $Bout = Bthr + \left(B2lin_i-Bthr\right) / diff_gain if B 2 lin_i < Bthr$ $Bout = B 2 lin_i if B 2 lin_i > = Bthr ;$ and
- setting the three iterated color components for the next iteration equal to the output values of the three mapping functions:
Rt = Rout;
Gt = Gout;
Bt = Bout; and
after finishing the last iteration setting the three output color components (Rlin_o, Glin_o, Glin_o) equal to the corresponding one of the three iterated color components (Rt, Gt, Bt).

10. The method as claimed in claim 9 comprising calculating scaled color components (Rlin_sc, Glin_sc, Blin_sc) by multiplying each one of the three output color components (Rlin_o, Glin_o, Glin_o) by a first scaling constant (LSC1) which is equal to a reciprocal value of one of the coefficients of the first 3x3 matrix (N).

11. The method as claimed in one of the above method claims comprising determining a white offset (Woff), which white offset instructs to map a value of lowered luminance of an achromatic color to maximum white, wherein the white offset value is calculated from one of the coefficients of the first matrix (N).

12. An inverse gamut mapping apparatus (701) arranged to map three input color components defined in an input color primary basis of first saturation to output color components in an output color gamut defined by an output color primary basis of second saturation (1R1, 1G1), wherein at least one of the primary colors (1R1) of the output color primary basis has higher color saturation than a corresponding primary color (1R2) of the input color primary basis, wherein the apparatus comprises:
- a multiplication unit (703) arranged to perform a multiplicative scaling of the three input color components by multiplying them by a second scaling constant (LSC2), which is indicated by metadata associated with an input image (IM_dec_in) wherein the three input color components are coded, yielding three corresponding scaled color components;
- a color mapping unit (603) arranged to obtain a value of a differential gain (diff_gain) and a red threshold value (Rthr), a green threshold value (Gthr) and map a blue threshold value (Bthr), and map the scaled color components to intermediate color components in a wider gamut (R3lin_i, G3lin_i, B3lin_i), by performing the equations: $R 3 lin_i = Rthr + \left(Rlin_o-Rthr\right) * diff_gain if Rlin_o < Rthr$ $R 3 lin_i = Rlin_o if Rlin_o > = Rthr ;$ $G 3 lin_i = Gthr + \left(Glin_o-Gthr\right) * diff_gain if Glin_o < Gthr$ $G 3 lin_i = Glin_o if Glin_o > = Gthr ;$ $B 3 lin_i = Bthr + \left(Blin_o-Bthr\right) * diff_gain if Blin_o < Bthr$ $B 3 lin_i = Blin_o if Blin_o > = Bthr ;$ and
- a color space converter (602) arranged to calculate final wider gamut output color components (Rlin_oo, Glin_oo, Blin_oo) by multiplying a second 3x3 matrix (M) by the intermediate color components (R3lin_i, G3lin_i, B3lin_i), wherein coefficients of the matrix (M) is a color matrix for converting a color represented as a color coordinate triplet in the input color primary basis to a corresponding color coordinate triplet in the output color primary basis.

13. The inverse gamut mapping apparatus (701) as claimed in claim 12 comprising a white offset adjustment unit (820) arranged to determine an adjusted white offset (Wo2) based on a white offset (Woff) as received and one of the coefficients of a first matrix (N), which is a matrix for color space conversion from the output color primary basis to the input color primary basis, which white offset instructs a comprised tone mapper (720) to map a maximum luminance of a range of input luminances to a value of lowered luminance of an achromatic color on a range of high dynamic range output luminances wherein the final wider gamut output color components reside.

14. A method of inverse gamut mapping arranged to map three input color components defined in an input color primary basis of first saturation to output color components in an output color gamut defined by an output color primary basis of second saturation (1R1, 1G1), wherein at least one of the primary colors (1R1) of the output color primary basis has higher color saturation than a corresponding primary color (1R2) of the input color primary basis, wherein the method comprises:
- performing a multiplicative scaling of the three input color components by multiplying them by a second scaling constant (LSC2), which is indicated by metadata associated with an input image (IM_dec_in) wherein the three input color components are coded, yielding three corresponding scaled color components;
- obtaining a value of a differential gain (diff_gain) and a red threshold value (Rthr), a green threshold value (Gthr) and map a blue threshold value (Bthr),
- mapping the scaled color components to intermediate color components in a wider gamut (R3lin_i, G3lin_i, B3lin_i), by performing the equations: $R 3 lin_i = Rthr + \left(Rlin_o-Rthr\right) * diff_gain if Rlin_o < Rthr$ $R 3 lin_i = Rlin_o if Rlin_o > = Rthr ;$ $G 3 lin_i = Gthr + \left(Glin_o-Gthr\right) * diff_gain if Glin_o < Gthr$ $G 3 lin_i = Glin_o if Glin_o > = Gthr ;$ $B 3 lin_i = Bthr + \left(Blin_o-Bthr\right) * diff_gain if Blin_o < Bthr$ $B 3 lin_i = Blin_o if Blin_o > = Bthr ;$ and
- a color space converter (602) arranged to calculate final wider gamut output color components (Rlin_oo, Glin_oo, Blin_oo) by multiplying a second 3x3 matrix (M) by the intermediate color components (R3lin_i, G3lin_i, B3lin_i), wherein coefficients of the matrix (M) is a color matrix for converting a color represented as a color coordinate triplet in the input color primary basis to a corresponding color coordinate triplet in the output color primary basis.

15. The method of method of inverse gamut mapping as claimed in claim 14, comprising white offset adjustment arranged to determine an adjusted white offset (Wo2) based on a white offset (Woff) as received and one of the coefficients of a first matrix (N), which is a matrix for color space conversion from the output color primary basis to the input color primary basis, which white offset instructs a tone mapping to map a maximum luminance of a range of input luminances to a value of lowered luminance of an achromatic color on a range of high dynamic range output luminances wherein the final wider gamut output color components reside.
